# EUROPEAN PATENT APPLICATION

(11) **EP 4 194 206 A1**
(43) Date of publication of application: **14.06.2023**
(21) Application number: 21853223.2
(22) Date of filing: 03.08.2021
(51) Int. Cl.: B32B 27/36, C08J 3/11, C08K 5/00, C08K 5/053, C08K 5/3415, C08L 67/00, C08L 67/04

(54) **LIQUID COMPOSITION, PRODUCTION METHOD FOR LIQUID COMPOSITION, PRODUCTION METHOD FOR LIQUID CRYSTAL POLYESTER FILM, AND PRODUCTION METHOD FOR LAMINATE**

(30) Priority: 07.08.2020 JP 2020134629; 20.04.2021 JP 2021071091
(71) Applicant: SUMITOMO CHEMICAL COMPANY, LIMITED, Tokyo 103-6020 (JP)
(72) Inventor: AZAMI Shohei, Tsukuba-shi, Ibaraki 300-3294 (JP); ITO Toyonari, Tokyo 103-6020 (JP)
(74) Representative: Vossius & Partner Patentanwälte Rechtsanwälte mbB
(86) International application number: PCT/JP2021/028780
(87) International publication number: WO 2022/030494

(57) **Abstract**

A liquid composition comprising: a liquid crystal polyester powder comprising a liquid crystal polyester and having an average particle diameter of 30 µm or less; and a medium, wherein a specific gravity of the medium measured in accordance with JIS Z 8804 using water as a reference substance is 0.90 or more.

## Description

### Technical Field

The present invention relates to a liquid composition, a method for producing the liquid composition, a method for producing a liquid crystal polyester film, and a method for producing a laminate.

The present application claims priority based on Japanese Patent Application No. 2020-134629 filed in Japan on August 7, 2020 and Japanese Patent Application No. 2021-071091 filed in Japan on April 20, 2021, the contents of which are incorporated herein by reference in their entirety.

### Background Art

A liquid crystal polyester film has an excellent high frequency property and has a low water absorption property and thus is attracting attention as an electronic substrate material.

A composition comprising a liquid crystal polyester may be used in the production of the liquid crystal polyester film. Patent Literature 1 discloses a paste comprising a dispersion medium and a specific fibrillated liquid crystal polymer powder dispersed in the dispersion medium. Patent Literature 1 discloses that examples of the above dispersion medium include ethanol, terpineol, butyl lactone, and isopropyl alcohol.

### Citation List

### Patent Literature

Patent Literature 1: International Publication No. WO2014/188830

### Summary of Invention

### Problems to be Solved by Invention

The present inventors have found that a liquid crystal polyester film having a quality suitable as a film for an electronic part can be produced by first applying a liquid composition comprising: a liquid crystal polyester powder comprising a liquid crystal polyester; and a dispersion medium onto a support and then heat-treating the liquid composition.

In order to produce a high quality liquid crystal polyester film, the liquid crystal polyester powder is preferably more uniformly dispersed in a medium. However, in the paste disclosed in Patent Literature 1 or the like, there is still room for improvement in terms of the dispersibility of the liquid crystal polyester powder in the liquid composition.

The present invention has been made in order to solve the above problem, and an object thereof is to provide a liquid composition comprising a liquid crystal polyester powder and a medium and having good dispersibility of the liquid crystal polyester powder in the medium, and a method for producing the liquid composition.

In addition, another object of the present invention is to provide a method for producing a liquid crystal polyester film and a method for producing a laminate, using the liquid composition.

### Means to Solve the Problems

The present inventors have carried out diligent studies in order to solve the above problem and as a result, have found that by mixing a liquid crystal polyester powder having a specific average particle diameter and a medium having a particular specific gravity, it is possible to provide a liquid crystal composition having good dispersibility of the liquid crystal polyester powder, and have completed the present invention.

That is, the present invention has the following aspects.
<1> A liquid composition comprising:
   a liquid crystal polyester powder comprising a liquid crystal polyester and having an average particle diameter of 30 µm or less; and
   a medium, wherein
   a specific gravity of the medium measured in accordance with JIS Z 8804 using water as a reference substance is 0.90 or more.
<2> The liquid composition according to the <1>, wherein the liquid composition is a dispersion in which the liquid crystal polyester powder is dispersed in the medium that is a liquid.
<3> The liquid composition according to the <1> or <2>, wherein the average particle diameter of the liquid crystal polyester powder is 0.5 µm or more and 30 µm or less.
<4> The liquid composition according to any one of the <1> to <3>, wherein a difference in specific gravity between a specific gravity of the liquid crystal polyester powder measured by JIS K 7112 (method A) using water as a reference substance and the specific gravity of the medium measured in accordance with JIS Z 8804 using water as a reference substance is within 0.48.
<5> The liquid composition according to any one of the <1> to <4>, wherein the specific gravity of the medium measured in accordance with JIS Z 8804 using water as a reference substance is 0.95 or more.
<6> The liquid composition according to any one of the <1> to <5>, wherein the medium is at least one selected from the group consisting of propylene glycol, ethylene glycol, butanediol, N-methyl-2-pyrrolidone, butyl lactate, di-(2-chloroethyl) ether, dichloromethane, and sulfolane.
<7> The liquid composition according to any one of the <1> to <5>, wherein the medium is at least one selected from the group consisting of propylene glycol, ethylene glycol, butanediol, dichloromethane, and sulfolane.
<8> The liquid composition according to any one of the <1> to <7>, wherein the specific gravity of the medium measured in accordance with JIS Z 8804 using water as a reference substance is 1.03 or more.
<9> The liquid composition according to any one of the <1> to <8>, wherein a viscosity of the medium measured between 20 and 25°C is 10 mPa·s or more.
<10> The liquid composition according to any one of the <1> to <9>, wherein a specific gravity of the liquid crystal polyester powder measured in accordance with JIS Z 7112 (method A) using water as a reference substance is 1.35 or more and 1.40 or less.
<11> The liquid composition according to any one of the <1> to <10>, wherein the liquid crystal polyester comprises a structural unit represented by the following formula (1):

   (1) -O-Ar1-CO-

   -wherein Ar1 represents a divalent aromatic hydrocarbon group, and
   one or more hydrogen atoms in the group represented by Ar1 are each independently optionally replaced with a halogen atom, an alkyl group having 1 to 10 carbon atoms, or an aryl group having 6 to 20 carbon atoms.
<12> The liquid composition according to any one of the <1> to <11>, wherein the liquid crystal polyester comprises a structural unit comprising a naphthalene structure.
<13> The liquid composition according to the <12>, wherein the liquid crystal polyester comprises 40 mol% or more of a structural unit represented by the following formula (1) based on a total amount of all structural units in the liquid crystal polyester:

   (1) -O-Ar1-CO-

   -wherein Ar1 represents a 2,6-naphthylene group, and
   one or more hydrogen atoms in the group represented by Ar1 are each independently optionally replaced with a halogen atom, an alkyl group having 1 to 10 carbon atoms, or an aryl group having 6 to 20 carbon atoms.
<14> The liquid composition according to any one of the <1> to <13>, wherein the liquid crystal polyester comprises a structural unit represented by the following formula (1) and a structural unit represented by the following formula (2), or
   comprises a structural unit represented by the following formula (1), a structural unit represented by the following formula (2), and a structural unit represented by the following formula (2):

      (1) -O-Ar1-CO-

      (2) -CO-Ar2-CO-

      (3) -O-Ar3-O-

      wherein Ar1 represents a 2,6-naphthylene group, a 1,4-phenylene group, or a 4,4'-biphenylylene group;
   Ar2 and Ar3 each independently represent a 2,6-naphthylene group, a 2,7-naphthylene group, a 1,4-phenylene group, a 1,3-phenylene group, or a 4,4'-biphenylylene group; and
   hydrogen atoms in the group represented by Ar1, Ar2, or Ar3 are each independently optionally replaced with a halogen atom, an alkyl group having 1 to 10 carbon atoms, or an aryl group having 6 to 20 carbon atoms.
<15> The liquid composition according to any one of the <1> to <14>, wherein a proportion of a content of the medium is 50 to 99% by mass, and a proportion of a content of the liquid crystal polyester powder is 0.1 to 50% by mass based on a total mass of the liquid composition.
<16> A method for producing the liquid composition according to any one of the <1> to <15>, the method comprising a step of mixing:
   a liquid crystal polyester powder comprising a liquid crystal polyester and having an average particle diameter of 30 µm or less; and
   a medium, wherein
   a specific gravity of the medium measured in accordance with JIS Z 8804 using water as a reference substance is 0.90 or more.
<17> A method for producing a liquid crystal polyester film, comprising: obtaining a liquid crystal polyester film comprising the liquid crystal polyester by applying the liquid composition according to any one of the <1> to <15> onto a support and heat-treating the liquid composition.
<18> A method for producing a laminate, comprising: obtaining a laminate comprising the support and the liquid crystal polyester film by applying the liquid composition according to any one of the <1> to <15> onto the support and heat-treating the liquid composition to form the liquid crystal polyester film comprising the liquid crystal polyester.

### Effects of Invention

According to the present invention, it is possible to provide a liquid composition having good dispersibility of a liquid crystal polyester powder in a medium and a method for producing the liquid composition.

In addition, according to the present invention, it is possible to provide a method for producing a liquid crystal polyester film and a method for producing a laminate, using the liquid composition.

### Brief Description of Drawings

[Figure 1A] Figure 1A is a schematic diagram showing a production process of the liquid crystal polyester film and the laminate according to one embodiment of the present invention.
[Figure 1B] Figure 1B is a schematic diagram showing a production process of the liquid crystal polyester film and the laminate according to one embodiment of the present invention.
[Figure 1C] Figure 1C is a schematic diagram showing a production process of the liquid crystal polyester film and the laminate according to one embodiment of the present invention.
[Figure 1D] Figure 1D is a schematic diagram showing a production process of the liquid crystal polyester film and the laminate according to one embodiment of the present invention.
[Figure 2] Figure 2 is a schematic diagram showing a configuration of the liquid crystal polyester film according to one embodiment of the present invention.
[Figure 3] Figure 3 is a schematic diagram showing a configuration of the laminate according to one embodiment of the present invention.
[Figure 4] Figure 4 is images showing the appearances of the liquid composition (dispersion medium: cyclohexanone) of Example 5.
[Figure 5] Figure 5 is images showing the appearances of the liquid composition (dispersion medium: ethylene glycol) of Example 10.
[Figure 6] Figure 6 is images showing the appearances of the liquid compositions of Examples 17 to 21.
[Figure 7] Figure 7 is images showing the appearances of the liquid compositions of Examples 22 to 26.
[Figure 8] Figure 8 is images showing the appearances of the liquid compositions of Examples 27 to 31.
[Figure 9] Figure 9 is images showing the appearances of the liquid compositions of Examples 32 to 36.
[Figure 10] Figure 10 is images showing the appearances of the liquid compositions of Examples 37 to 41.
[Figure 11] Figure 11 is images showing the appearances of the liquid compositions of Examples 42 to 46.

### Embodiments for Carrying out Invention

Hereinafter, embodiments of the liquid composition, the method for producing the liquid composition, the method for producing a liquid crystal polyester film, and the method for producing a laminate according to the present invention will be described.

### <<Liquid composition>>

The liquid composition of an embodiment comprises: a liquid crystal polyester powder comprising a liquid crystal polyester and having an average particle diameter of 30 µm or less; and a medium, wherein the specific gravity of the medium measured in accordance with JIS Z 8804 using water as a reference substance is 0.90 or more.

The liquid composition of the embodiment has good dispersibility of the liquid crystal polyester powder in the medium.

In the liquid composition of the embodiment, the state in which the liquid crystal polyester powder has good dispersibility in the medium refers to a state in which it can be visually confirmed that the distribution of the liquid crystal polyester powder in the composition is uniform.

In the present description, the "powder" included in the liquid composition means a particle comprising a liquid crystal polyester.

The liquid composition comprising a liquid crystal polyester powder according to the embodiment is suitable as a raw material for the method for producing a liquid crystal polyester film or a laminate according to the embodiment.

### <Liquid crystal polyester powder>

The liquid crystal polyester powder according to the embodiment comprises a liquid crystal polyester and has an average particle diameter of 30 µm or less.

According to the liquid crystal polyester powder satisfying the above stipulations, it is possible to produce a liquid crystal polyester film having suitable quality as a film for an electronic part. Examples of standards of the quality include isotropy of the film. The details of the liquid crystal polyester film will be described later.

In the present description, the "average particle diameter" is determined as follows: 0.01 g of a liquid crystal polyester powder is weighed and dispersed in about 10 g of pure water to prepare a dispersion of the liquid crystal polyester powder, the dispersion is dispersed using an ultrasonic wave for 5 minutes to obtain a test solution, and the test solution is measured by a laser diffraction scattering method with the refractive index of pure water being 1.333 using a laser diffraction scattering type particle diameter distribution measuring apparatus (for example, "LA-950V2" manufactured by HORIBA, Ltd.). The average particle diameter is the value of the particle diameter at the point at which the cumulative volume is 50% (50% cumulative volume particle size D₅₀) when the whole is 100% in a volume-based cumulative particle size distribution curve obtained by the measurement.

In addition, the particle diameter at which the cumulative volume proportion from the small particle side is 10% is defined as D₁₀, and the particle diameter at which the cumulative volume proportion therefrom is 90% is defined as D₉₀.

The average particle diameter (D₅₀) of the liquid crystal polyester powder is 30 µm or less, preferably 20 µm or less, more preferably 18 µm or less, even more preferably 15 µm or less, and particularly preferably 10 µm or less. When the average particle diameter of the liquid crystal polyester powder exceeds 30 µm, it becomes difficult to obtain a liquid composition having a good state of dispersion of the liquid crystal polyester powder. In addition, when the average particle diameter of the liquid crystal polyester is 20 µm or less, it is possible to produce a liquid crystal polyester film having a thickness suitable for a film for an electronic part (for example, 50 µm or less) and having a good film surface smoothness.

In addition, the average particle diameter (D₅₀) of the liquid crystal polyester powder is preferably 0.5 µm or more, more preferably 3 µm or more, and even more preferably 5 µm or more, from the viewpoint of ease of handling the powder.

One of the above upper limit values and one of the above lower limit values of a value of the average particle diameter (D₅₀) of the liquid crystal polyester powder can be freely combined. One example of the numerical range of a value of the average particle diameter of the liquid crystal polyester powder may be 0.5 µm or more and 30 µm or less, 0.5 µm or more and 20 µm or less, 3 µm or more and 18 µm or less, 5 µm or more and 15 µm or less, 5 µm or more and 12 µm or less, or 5 µm or more and 10 µm or less.

The particle diameter (D₁₀) of the liquid crystal polyester powder is preferably 1 µm or more and 20 µm or less, more preferably 2 µm or more and 18 µm or less, and even more preferably 3 µm or more and 15 µm or less. The liquid crystal polyester powder in which the value of D₁₀ is within the above range is preferable because the dispersibility thereof in a medium is improved.

The particle diameter (D₉₀) of the liquid crystal polyester powder is preferably 5 µm or more and 100 µm or less, more preferably 10 µm or more and 80 µm or less, and even more preferably 15 µm or more and 60 µm or less. The liquid crystal polyester powder in which the value of D₉₀ is within the above range is preferable because the dispersibility thereof in a medium is improved.

The liquid crystal polyester powder according to the embodiment can be obtained, for example, by producing a liquid crystal polyester by the method for producing a liquid crystal polyester described later and, if necessary, subjecting a powder of the liquid crystal polyester to pulverization treatment using a jet mill or the like so that the average particle diameter thereof may be 30 µm or less.

Examples of a method for controlling the particle diameter to be in the above range include a method of crushing a liquid crystal polyester using a jet mill. In that case, the particle diameter can be controlled by changing the rotation speed of a classification rotor, the pulverization nozzle pressure, the treatment speed, or the like. In addition, the operation of particle classification may be carried out using a sieve having an aperture size corresponding to a desired particle diameter.

The liquid composition of the embodiment may be a dispersion in which the liquid crystal polyester powder is dispersed in the medium that is a liquid.

The liquid composition of the embodiment may be a dispersion in which a liquid crystal polyester powder is insoluble in a medium and the liquid crystal polyester powder is dispersed in the medium that is a liquid.

Here, whether or not a liquid crystal polyester powder is insoluble in a medium can be confirmed by carrying out the following test.

### • Test method

A liquid crystal polyester powder (5 parts by mass) is stirred in a medium (95 parts by mass) at a temperature of 180°C using an anchor blade under a stirring condition of 200 rpm for 6 hours, and then cooled to room temperature (23°C). Next, filtration is carried out using a membrane filter having an aperture size of 5 µm and a pressurized filtration machine, and then a residue on the membrane filter is checked. At this time, when no solid is found, it is determined that the powder is soluble in the medium. If a solid is found, it is determined that the powder is insoluble in the medium. The solid can be observed by microscopic observation.

It can be determined that the liquid crystal polyester powder is insoluble in the medium, also by confirming that the average particle diameter of the liquid crystal polyester powder contained in the liquid composition has a value of 0.5 µm or more as given above as a preferable example of the average particle diameter (D₅₀) of the liquid crystal polyester powder.

Because the liquid crystal polyester powder is insoluble in the medium, it is not necessary to dissolve the liquid crystal polyester powder in a solvent in the method for producing a liquid crystal polyester film or a laminate according to the embodiment described later, and thus the liquid crystal polyester powder having excellent dielectric properties can be adopted as a raw material. A liquid crystal polyester film having excellent dielectric properties can be produced from the liquid crystal polyester powder having excellent dielectric properties.

In the present description, the "dielectric properties" refer to properties relating to the relative permittivity and the dielectric loss tangent.

The liquid crystal polyester powder according to the embodiment preferably has a relative permittivity at a frequency of 1 GHz of preferably 3 or less, preferably 2.9 or less, preferably 2.8 or less, more preferably less than 2.8, even more preferably 2.78 or less, and particularly preferably 2.76 or less. In addition, the relative permittivity of the liquid crystal polyester powder may be 2.5 or more, 2.6 or more, or 2.7 or more.

One of the above upper limit values and one of the above lower limit values of a value of the relative permittivity of the liquid crystal polyester powder can be freely combined. One example of the numerical range of a value of the relative permittivity of the liquid crystal polyester powder may be 2.5 or more and 3 or less, 2.6 or more and 2.78 or less, or 2.7 or more and 2.76 or less.

The liquid crystal polyester powder according to the embodiment preferably has a dielectric loss tangent at a frequency of 1 GHz of preferably 0.005 or less, preferably 0.004 or less, more preferably 0.003 or less, even more preferably 0.0025 or less, and particularly preferably 0.002 or less. In addition, the dielectric loss tangent of the liquid crystal polyester powder may be 0.0003 or more, 0.0005 or more, or 0.001 or more.

One example of the numerical range of a value of the dielectric loss tangent of the liquid crystal polyester powder may be 0.0003 or more and 0.005 or less, 0.0005 or more and 0.004 or less, 0.001 or more and 0.003 or more, 0.001 or more and 0.0025 or less, and 0.001 or more and 0.002 or less.

The relative permittivity and the dielectric loss tangent at a frequency of 1 GHz of the liquid crystal polyester powder can be measured under the following conditions by a capacitance method using an impedance analyzer.

A liquid crystal polyester fine particle powder is melted at a temperature of 5°C higher than the flow starting temperature measured using a flow tester, and then cooled and solidified to manufacture a tablet having a diameter of 1 cm and a thickness of 0.5 cm. The relative permittivity and the dielectric loss tangent at 1 GHz of the obtained tablet are measured under the following conditions.
- Measurement method: Capacitance method
- Electrode model: 16453A
- Measurement environment: 23°C, 50% RH
- Applied voltage: 1 V

The relative permittivity and the dielectric loss tangent of the liquid crystal polyester powder according to the embodiment may be different from those of the liquid crystal polyester film produced from the powder as a raw material. It is considered that the difference is due to the difference in the molecular weight of the liquid crystal polyester contained in the film.

The proportion of content of the liquid crystal polyester may be 80 to 100% by mass or 90 to 98% by mass based on 100% by mass of the liquid crystal polyester powder according to the embodiment.

In addition, acetic acid derived from acetic anhydride used for producing the liquid crystal polyester may remain in the liquid crystal polyester powder according to the embodiment, and the amount of residual acetic acid that can be included in 100% by mass of the liquid crystal polyester powder according to the embodiment is preferably 1% by mass or less, more preferably 500 ppm by mass or less, and even more preferably 300 ppm by mass or less, from the viewpoint of a mechanical physical property after processing into a film. In addition, the amount of residual acetic acid included in 100% by mass of the liquid crystal polyester powder according to the embodiment is preferably 30 ppm by mass or more, more preferably 50 ppm by mass or more, and even more preferably 100 ppm by mass or more, from the viewpoint of pulverizability.

One example of the numerical range of a value of the amount of residual acetic acid that can be included in 100% by mass of the liquid crystal polyester powder may be 30 ppm by mass or more and 1% by mass or less, 50 ppm by mass or more and 500 ppm by mass or less, or 100 ppm by mass or more and 300 ppm by mass or less.

The liquid crystal polyester powder according to the embodiment may be a liquid crystal polyester powder comprising a liquid crystal polyester and having an average particle diameter of 30 µm or less (except for a liquid crystal polyester powder that consists of a liquid crystal polyester consisting of a structural unit derived from 2-hydroxy-6-naphthoic acid, a structural unit derived from 2,6-naphthalenedicarboxylic acid, a structural unit derived from terephthalic acid, and a structural unit derived from hydroquinone and has a volume average particle diameter of 9 µm).

The liquid crystal polyester powder according to the embodiment may be a liquid crystal polyester powder comprising a liquid crystal polyester and having an average particle diameter of 30 µm or less (except for a liquid crystal polyester powder that consists of a liquid crystal polyester that is a polymer obtained by reacting a mixture of 2-hydroxy-6-naphthoic acid (5.5 mol), 2,6-naphthalenedicarboxylic acid (1.75 mol), terephthalic acid (0.5 mol), hydroquinone (2.475 mol), acetic anhydride (12 mol), and 1-methylimidazole as a catalyst and has a volume average particle diameter of 9 µm).

The liquid crystal polyester powder according to the embodiment may be a liquid crystal polyester powder comprising a liquid crystal polyester and having an average particle diameter of 30 µm or less (except fora liquid crystal polyester powder having a volume average particle diameter of 9 µm obtained by pulverizing a liquid crystal polyester having a flow starting temperature of 265°C consisting of a structural unit derived from 2-hydroxy-6-naphthoic acid, a structural unit derived from 2,6-naphthalenedicarboxylic acid, a structural unit derived from terephthalic acid, and a structural unit derived from hydroquinone).

The liquid crystal polyester powder according to the embodiment may be a liquid crystal polyester powder comprising a liquid crystal polyester and having an average particle diameter of 30 µm or less (except fora liquid crystal polyester powder that comprises a structural unit derived from 2-hydroxy-6-naphthoic acid, a structural unit derived from 2,6-naphthalenedicarboxylic acid, a structural unit derived from terephthalic acid, and a structural unit derived from hydroquinone and has a volume average particle diameter of 9 µm).

The liquid crystal polyester powder according to the embodiment may be a liquid crystal polyester powder comprising a liquid crystal polyester and having an average particle diameter of 30 µm or less (except fora liquid crystal polyester powder that is a polymer obtained by reacting a mixture of 2-hydroxy-6-naphthoic acid (5.5 mol), 2,6-naphthalenedicarboxylic acid (1.75 mol), terephthalic acid (0.5 mol), hydroquinone (2.475 mol), acetic anhydride (12 mol), and 1-methylimidazole as a catalyst and has a volume average particle diameter of 9 µm).

The liquid crystal polyester powder according to the embodiment may be a liquid crystal polyester powder comprising a liquid crystal polyester and having an average particle diameter of 30 µm or less (except fora liquid crystal polyester powder having a volume average particle diameter of 9 µm obtained by pulverizing a liquid crystal polyester that comprises a structural unit derived from 2-hydroxy-6-naphthoic acid, a structural unit derived from 2,6-naphthalenedicarboxylic acid, a structural unit derived from terephthalic acid, and a structural unit derived from hydroquinone and has a flow starting temperature of 265°C) .

The liquid crystal polyester powder according to the embodiment may be a liquid crystal polyester powder comprising a liquid crystal polyester and having an average particle diameter of 30 µm or less (except for a liquid crystal polyester powder having a volume average particle diameter of 9 µm obtained by pulverizing a polymer that is obtained by reacting a mixture of 2-hydroxy-6-naphthoic acid (5.5 mol), 2,6-naphthalenedicarboxylic acid (1.75 mol), terephthalic acid (0.5 mol), hydroquinone (2.475 mol), acetic anhydride (12 mol), and 1-methylimidazole as a catalyst and has a flow starting temperature of 265°C).

The "volume average particle diameter" here is determined as follows: 0.01 g of a liquid crystalline polyester powder is dispersed in about 10 g of pure water using an ultrasonic wave for 5 minutes to obtain a dispersion of the liquid crystalline polyester powder, and the dispersion is measured with the refractive index of pure water being 1.333 using a scattering type particle diameter distribution measuring apparatus (for example, "LA-950V2" manufactured by HORIBA, Ltd.). The "volume average particle diameter" is the value of the particle diameter at the point at which the cumulative volume is 50% (50% cumulative volume particle size D₅₀) when the whole is 100% in a volume-based cumulative particle size distribution curve obtained by the measurement using the scattering type particle diameter distribution measuring apparatus.

### (Liquid crystal polyester)

Hereinafter, one embodiment of the liquid crystal polyester used in the present embodiment will be described.

The liquid crystal polyester according to the present embodiment is preferably a polyester that exhibits a liquid crystal in a molten state and is melted at a temperature of 450°C or less. The liquid crystal polyester may be a liquid crystal polyester amide, a liquid crystal polyester ether, a liquid crystal polyester carbonate, or a liquid crystal polyester imide. The liquid crystal polyester is preferably a wholly aromatic liquid crystal polyester having only a structural unit derived from an aromatic compound as a raw material monomer.

Typical examples of the liquid crystal polyester include a polymer obtained by condensation polymerization (polycondensation) of an aromatic hydroxycarboxylic acid, an aromatic dicarboxylic acid, and at least one compound selected from the group consisting of an aromatic diol, an aromatic hydroxyamine, and an aromatic diamine; a polymer obtained by polymerizing a plurality of aromatic hydroxycarboxylic acids; a polymer obtained by polymerizing an aromatic dicarboxylic acid and at least one compound selected from the group consisting of an aromatic diol, an aromatic hydroxylamine, and an aromatic diamine; and a polymer obtained by polymerizing a polyester such as polyethylene terephthalate and an aromatic hydroxycarboxylic acid.

Among these, a polymer obtained by condensation polymerization (polycondensation) of an aromatic hydroxycarboxylic acid, an aromatic dicarboxylic acid, and at least one compound selected from the group consisting of an aromatic diol, an aromatic hydroxyamine, and an aromatic diamine is preferable as the liquid crystal polyester.

Here, the aromatic hydroxycarboxylic acid, the aromatic dicarboxylic acid, the aromatic diol, the aromatic hydroxyamine, and the aromatic diamine may each independently be partially or completely substituted with a polymerizable ester-forming derivative thereof.

Examples of a polymerizable derivative of a compound having a carboxy group such as an aromatic hydroxycarboxylic acid and an aromatic dicarboxylic acid include an ester, an acid halide, and an acid anhydride. Examples of the above ester include a compound obtained by converting the carboxy group into an alkoxycarbonyl group or an aryloxycarbonyl group. Examples of the above acid halide include a compound obtained by converting the carboxy group into a haloformyl group. Examples of the above acid anhydride include a compound obtained by converting the carboxy group into an acyloxycarbonyl group.

Examples of a polymerizable derivative of a compound having a hydroxy group such as an aromatic hydroxycarboxylic acid, an aromatic diol, and an aromatic hydroxyamine include a compound obtained by acylating the hydroxy group to convert the same into an acyloxy group (acylated product).

Examples of a polymerizable derivative of a compound having an amino group such as an aromatic hydroxyamine and an aromatic diamine include a compound obtained by acylating the amino group to convert the same into an acylamino group (acylated product).

Among the examples of the polymerizable derivatives given as examples, acylated products obtained by acylating an aromatic hydroxycarboxylic acid and an aromatic diol are preferable as a raw material monomer of the liquid crystal polyester.

The liquid crystal polyester according to the embodiment preferably has a structural unit represented by the following formula (1) (hereinafter, sometimes referred to as a "structural unit (1)"):

(1) -O-Ar1-CO-

-wherein Ar1 represents a divalent aromatic hydrocarbon group, and
one or more hydrogen atoms in the group represented by Ar1 are each independently optionally replaced with a halogen atom, an alkyl group having 1 to 10 carbon atoms, or an aryl group having 6 to 20 carbon atoms.

For the liquid crystal polyester according to the embodiment, in the structural unit represented by the following formula (1), Ar1 preferably represents a phenylene group, a naphthylene group, or a biphenylylene group.

The liquid crystal polyester according to the embodiment more preferably has a structural unit (1) and a structural unit represented by the following formula (2) (hereinafter, sometimes referred to as a "structural unit (2)"). The liquid crystal polyester according to the embodiment more preferably has a structural unit (1), a structural unit (2), and a structural unit represented by the following formula (3) (hereinafter, sometimes referred to as a "structural unit (3)").

(1) -O-Ar1-CO-

(2) -CO-Ar2-CO-

(3) -X-Ar3-Y-

wherein Ar1 represents a phenylene group, a naphthylene group, or a biphenylylene group;
Ar2 and Ar3 each independently represent a phenylene group, a naphthylene group, a biphenylylene group, or a group represented by the following formula (4); X and Y each independently represent an oxygen atom or an imino group (-NH-); and
one or more hydrogen atoms in the group represented by Ar1, Ar2, or Ar3 are each independently optionally replaced with a halogen atom, an alkyl group having 1 to 10 carbon atoms, or an aryl group having 6 to 20 carbon atoms.

   (4) -Ar4-Z-Ar5-
wherein Ar4 and Ar5 each independently represent a phenylene group or a naphthylene group; Z represents an oxygen atom, a sulfur atom, a carbonyl group, a sulfonyl group, or an alkylidene group having 1 to 10 carbon atoms; and
one or more hydrogen atoms in the group represented by Ar4 or Ar5 are each independently optionally replaced with a halogen atom, an alkyl group having 1 to 10 carbon atoms, or an aryl group having 6 to 20 carbon atoms.

Examples of the halogen atom with which a hydrogen atom can be replaced include a fluorine atom, a chlorine atom, a bromine atom, and an iodine atom.

Examples of the alkyl group having 1 to 10 carbon atoms with which a hydrogen atom can be replaced include a methyl group, an ethyl group, a 1-propyl group, an isopropyl group, a 1-butyl group, an isobutyl group, a sec-butyl group, a tert-butyl group, a 1-hexyl group, a 2-ethylhexyl group, a 1-octyl group, and a 1-decyl group.

Examples of the aryl group having 6 to 20 carbon atoms with which a hydrogen atom can be replaced include a monocyclic aromatic group such as a phenyl group, an orthotolyl group, a metatolyl group, or a paratolyl group, and a condensed aromatic group such as a 1-naphthyl group or a 2-naphthyl group.

When one or more hydrogen atoms in the group represented by Ar1, Ar2, Ar3, Ar4, or Ar5 are replaced with the halogen atom, the alkyl group having 1 to 10 carbon atoms, or the aryl group having 6 to 20 carbon atoms, the number of groups replacing the hydrogen atoms for each group represented by Ar1, Ar2, Ar3, Ar4, or Ar5 is, independently in each group, preferably one or two and more preferably one.

Examples of the alkylidene group having 1 to 10 carbon atoms include a methylene group, an ethylidene group, an isopropylidene group, a 1-butylidene group, and a 2-ethylhexylidene group.

In the structural unit (3), X and Y are each preferably an oxygen atom because the liquid crystal polyester powder tends to be insoluble in the medium.

The liquid crystal polyester according to the embodiment comprises a structural unit represented by the following formula (1) and a structural unit represented by the following formula (2), or
comprises a structural unit represented by the following formula (1), a structural unit represented by the following formula (2), and a structural unit represented by the following formula (2), and
the structural units (1) to (3) are more preferably a structural unit represented by the following formula (1), a structural unit represented by the following formula (2), and a structural unit represented by the following formula (3):

   (1) -O-Ar1-CO-

   (2) -CO-Ar2-CO-

   (3) -O-Ar3-O-

   wherein Ar1, Ar2, and Ar3 each independently represent a naphthylene group, a phenylene group, or a biphenylylene group; and
hydrogen atoms in the group represented by Ar1, Ar2, or Ar3 are each independently optionally replaced with a halogen atom, an alkyl group having 1 to 10 carbon atoms, or an aryl group having 6 to 20 carbon atoms.

The structural units (1) to (3) are even more preferably a structural unit represented by the following formula (1), a structural unit represented by the following formula (2), and a structural units represented by the following formula (3):

(1) -O-Ar1-CO-

(2) -CO-Ar2-CO-

(3) -O-Ar3-O-

wherein Ar1 represents a 2,6-naphthylene group, a 1,4-phenylene group, or a 4,4'-biphenylylene group;
Ar2 and Ar3 each independently represent a 2,6-naphthylene group, a 2,7-naphthylene group, a 1,4-phenylene group, a 1,3-phenylene group, or a 4,4'-biphenylylene group; and
hydrogen atoms in the group represented by Ar1, Ar2, or Ar3 are each independently optionally replaced with a halogen atom, an alkyl group having 1 to 10 carbon atoms, or an aryl group having 6 to 20 carbon atoms.

The liquid crystal polyester according to the embodiment preferably comprises a structural unit comprising a naphthalene structure. The liquid crystal polyester comprising a structural unit comprising a naphthalene structure tends to have excellent dielectric properties.

The content of the structural unit comprising a naphthalene structure in the liquid crystal polyester is preferably 40 mol% or more, preferably 50 mol% or more, more preferably 55 mol% or more, and even more preferably 60 mol% or more, based on 100 mol% in total of all the structural units in the liquid crystal polyester (the value of the sum of the amount of substance equivalent (mol) of each structural unit constituting the liquid crystal polyester determined by dividing the mass of the structural unit by the formula mass of the each structural unit. Because the content of the structural unit comprising a naphthalene structure is equal to or more than the above lower limit value, the relative permittivity of the liquid crystal polyester can be even more lowered. The content of the structural unit comprising a naphthalene structure in the liquid crystal polyester is preferably 90 mol% or less, more preferably 85 mol% or less, and even more preferably 80 mol% or less, per 100 mol% in total of all the structural units in the liquid crystal polyester. Because the content of the structural unit comprising a naphthalene structure is equal to or less than the above upper limit value, the reaction stability at the time of producing the liquid crystal polyester can be ensured.

One example of the numerical range of a value of the content of the structural unit comprising a naphthalene structure may be 40 mol% or more and 90 mol% or less, 50 mol% or more and 85 mol% or less, 55 mol% or more and 85 mol% or less, or 60 mol% or more and 80 mol% or less.

In a liquid crystal polyester having the above structural unit (1), the following structural unit (2), and the following structural unit (3) as a liquid crystal polyester having a structural unit comprising a divalent naphthalene structure, at least one of a plurality of groups represented by Ar1, Ar2, Ar3, Ar4, and Ar5 is preferably a naphthylene group.

In the liquid crystal polyester according to the embodiment, Ar1 is preferably a 2,6-naphthylene group.

Here, the liquid crystal polyester in which Ar1 is a 2,6-naphthylene group preferably has the above structural unit (1), the following structural unit (2), and the following structural unit (3).

The liquid crystal polyester according to the embodiment may contain the structural unit in which Ar1 is a 2,6-naphthylene group in the structural unit represented by the above formula (1) in an amount of 40 mol% or more, 40 mol% or more and 90 mol% or less, 50 mol% or more and 85 mol% or less, 55 mol% or more and 85 mol% or less, or 60 mol% or more and 80 mol% or less, based on the total amount of all the structural units in the liquid crystal polyester.

The structural unit (1) is, for example, a structural unit derived from an aromatic hydroxycarboxylic acid.

Examples of the aromatic hydroxycarboxylic acid include parahydroxybenzoic acid, metahydroxybenzoic acid, 2-hydroxy-6-naphthoic acid, 2-hydroxy-3-naphthoic acid, 1-hydroxy-5-naphthoic acid, 4-hydroxy-4'-carboxydiphenyl ether, or an aromatic hydroxycarboxylic acid obtained by partially replacing the hydrogen atoms in the aromatic ring of such an aromatic hydroxycarboxylic acid listed above with a substituent selected from the group consisting of an alkyl group, an aryl group, and a halogen atom. The aromatic hydroxycarboxylic acids may be used singly or in combinations of two or more in the production of the liquid crystal polyester. As the structural unit (1), one in which Ar1 is a 1,4-phenylene group (for example, a structural unit derived from 4-hydroxybenzoic acid) and one in which Ar1 is a 2,6-naphthylene group (for example, a structural unit derived from 6-hydroxy-2-naphthoic acid) are preferable.

The structural unit (2) is, for example, a structural unit derived from an aromatic dicarboxylic acid.

Examples of the aromatic dicarboxylic acid include terephthalic acid, isophthalic acid, biphenyl-4,4'-dicarboxylic acid, 2,6-naphthalenedicarboxylic acid, diphenyl ether-4,4'-dicarboxylic acid, and diphenyl thioether-4,4'-dicarboxylic acid, and an aromatic dicarboxylic acid obtained by partially replacing the hydrogen atoms in the aromatic ring of such an aromatic dicarboxylic acid listed above with a substituent selected from the group consisting of an alkyl group, an aryl group, and a halogen atom.

The aromatic dicarboxylic acids may be used singly or in combinations of two or more in the production of the liquid crystal polyester.

As the structural unit (2), one in which Ar2 is a 1,4-phenylene group (for example, a structural unit derived from terephthalic acid), one in which Ar2 is a 1,3-phenylene group (for example, a structural unit derived from isophthalic acid), one in which Ar2 is a 2,6-naphthylene group (for example, a structural unit derived from 2,6-naphthalenedicarboxylic acid), and one in which Ar2 is a diphenyl ether-4,4'-diyl group (for example, a structural unit derived from diphenyl ether-4,4'-dicarboxylic acid) are preferable.

The structural unit (3) is, for example, a structural unit derived from an aromatic diol, an aromatic hydroxyamine, or an aromatic diamine.

Examples of the aromatic diol, the aromatic hydroxyamine, or the aromatic diamine include 4,4'-dihydroxybiphenyl, hydroquinone, methylhydroquinone, resorcin, 4,4'-dihydroxydiphenyl ketone, 4,4'-dihydroxydiphenyl ether, bis(4-hydroxyphenyl)methane, 1,2-bis(4-hydroxyphenyl)ethane, 4,4'-dihydroxydiphenylsulfone, 4,4'-dihydroxydiphenyl thioether, 2,6-dihydroxynaphthalene, 1,5-dihydroxynaphthalene, 4-aminophenol, 1,4-phenylenediamine, 4-amino-4'-hydroxybiphenyl, and 4,4'-diaminobiphenyl.

The aromatic diols, the aromatic hydroxyamines, or the aromatic diamines may be used singly or in combinations of two or more in the production of the liquid crystal polyester.

As the structural unit (3), one in which Ar3 is a 1,4-phenylene group (for example, a structural unit derived from hydroquinone, 4-aminophenol, or 1,4-phenylenediamine) and one in which Ar3 is a 4,4'-biphenylylene group (for example, a structural unit derived from 4,4'-dihydroxybiphenyl, 4-amino-4'-hydroxybiphenyl, or 4,4'-diaminobiphenyl) are preferable.

In the present description, "derived" means that the chemical structure is changed for the polymerization of the raw material monomer, and no other changes of structural occur. The derived here is a concept also encompassing the case of being derived from a polymerizable derivative of a compound given above as an example.

When the liquid crystal polyester film obtained from the liquid composition of the embodiment is required to have particularly good heat resistance, the number of these substituents is preferably small, and particularly it is preferable not to have a substituent such as an alkyl group.

Next, liquid crystal polyesters particularly suitable for application to the liquid composition of the embodiment will be given as examples below.

Specific examples of the preferable liquid crystal polyesters include copolymers consisting of structural units derived from the following combinations of monomers.
1) 4-Hydroxybenzoic acid/2-hydroxy-6-naphthoic acid copolymer
2) 4-Hydroxybenzoic acid/terephthalic acid/4,4'-dihydroxybiphenyl copolymer 3) 4-Hydroxybenzoic acid/terephthalic acid/isophthalic acid/4,4'-dihydroxybiphenyl copolymer
4) 4-Hydroxybenzoic acid/terephthalic acid/isophthalic acid/4,4'-dihydroxybiphenyl/hydroquinone copolymer
5) 4-Hydroxybenzoic acid/terephthalic acid/hydroquinone copolymer
6) 2-Hydroxy-6-naphthoic acid/terephthalic acid/hydroquinone copolymer
7) 2-Hydroxy-6-naphthoic acid/terephthalic acid/2,6-naphthalenedicarboxylic acid/hydroquinone copolymer
8) 4-Hydroxybenzoic acid/2-hydroxy-6-naphthoic acid/terephthalic acid copolymer 9) 4-Hydroxybenzoic acid/2-hydroxy-6-naphthoic acid/isophthalic acid copolymer 10) 4-Hydroxybenzoic acid/2-hydroxy-6-naphthoic acid/terephthalic acid/4,4'-dihydroxybiphenyl copolymer
11) 4-Hydroxybenzoic acid/2-hydroxy-6-naphthoic acid/isophthalic acid/4,4'-dihydroxybiphenyl copolymer
12) 4-Hydroxybenzoic acid/2-hydroxy-6-naphthoic acid/terephthalic acid/2,6-naphthalenedicarboxylic acid/4,4'-dihydroxybiphenyl copolymer
13) 4-Hydroxybenzoic acid/2-hydroxy-6-naphthoic acid/terephthalic acid/4,4'-dihydroxybiphenyl/methylhydroquinone copolymer 14) 2-Hydroxy-6-naphthoic acid/terephthalic acid/4,4'-dihydroxybiphenyl copolymer
15) 2-Hydroxy-6-naphthoic acid/terephthalic acid/isophthalic acid/4,4'-dihydroxybiphenyl copolymer
16) 2-Hydroxy-6-naphthoic acid/terephthalic acid/2,6-naphthalenedicarboxylic acid/4,4'-dihydroxybiphenyl copolymer
17) 2-Hydroxy-6-naphthoic acid/terephthalic acid/isophthalic acid/2,6-naphthalenedicarboxylic acid/4,4'-dihydroxybiphenyl copolymer
18) 4-hydroxybenzoic acid/2-hydroxy-6-naphthoic acid/terephthalic acid/hydroquinone copolymer
19) 4-Hydroxybenzoic acid/2-hydroxy-6-naphthoic acid/terephthalic acid/3,3'-dimethyl-1,1'-biphenyl-4,4'-diol copolymer
20) 4-Hydroxybenzoic acid/2-hydroxy-6-naphthoic acid/terephthalic acid/hydroquinone/4,4'-dihydroxybiphenyl copolymer
21) 4-Hydroxybenzoic acid/2,6-naphthalenedicarboxylic acid/4,4'-dihydroxybiphenyl copolymer
22) 4-Hydroxybenzoic acid/terephthalic acid/2,6-naphthalenedicarboxylic acid/hydroquinone copolymer
23) 4-Hydroxybenzoic acid/2,6-naphthalenedicarboxylic acid/hydroquinone copolymer
24) 4-Hydroxybenzoic acid/2-hydroxy-6-naphthoic acid/2,6-naphthalenedicarboxylic acid/hydroquinone copolymer
25) 4-Hydroxybenzoic acid/terephthalic acid/2,6-naphthalenedicarboxylic acid/hydroquinone/4,4'-dihydroxybiphenyl copolymer
26) 4-Hydroxybenzoic acid/terephthalic acid/4-aminophenol copolymer
27) 2-Hydroxy-6-naphthoic acid/terephthalic acid/4-aminophenol copolymer 28) 4-Hydroxybenzoic acid/2-hydroxy-6-naphthoic acid/terephthalic acid/4-aminophenol copolymer
29) 4-Hydroxybenzoic acid/terephthalic acid/4,4'-dihydroxybiphenyl/4-aminophenol copolymer
30) 4-Hydroxybenzoic acid/terephthalic acid/ethylene glycol copolymer
31) 4-Hydroxybenzoic acid/terephthalic acid/4,4'-dihydroxybiphenyl/ethylene glycol copolymer
32) 4-Hydroxybenzoic acid/2-hydroxy-6-naphthoic acid/terephthalic acid/ethylene glycol copolymer
33) 4-Hydroxybenzoic acid/2-hydroxy-6-naphthoic acid/terephthalic acid/4,4'-dihydroxybiphenyl/ethylene glycol copolymer
34) 4-Hydroxybenzoic acid/terephthalic acid/2,6-naphthalenedicarboxylic acid/4,4'-dihydroxybiphenyl copolymer.

The content of the structural unit (1) of the liquid crystal polyester is preferably 30 mol% or more, more preferably 30 to 90 mol%, more preferably 30 to 85 mol%, even more preferably 40 to 75 mol%, especially preferably 50 to 70 mol%, and particularly preferably 55 to 70 mol%, based on the total amount of all the structural units constituting the liquid crystal polyester (the value of the sum of the amount of substance equivalent (mol) of each structural unit constituting the liquid crystal polyester determined by dividing the mass of the structural unit by the formula mass of the structural unit).

When the content of the structural unit (1) of the liquid crystal polyester is 30 mol% or more, the heat resistance and the hardness of a molded product obtained by using the liquid composition of the present embodiment are easily improved. In addition, when the content of the structural unit (1) is 80 mol% or less, the melt viscosity can be lowered. Therefore, the temperature required for molding the liquid crystal polyester is likely to be low.

The content of the structural unit (2) of the liquid crystal polyester is preferably 35 mol% or less, more preferably 10 to 35 mol%, even more preferably 15 to 35 mol%, and especially preferably 17.5 to 32.5 mol%, based on the total amount of all the structural units constituting the liquid crystal polyester.

The content of the structural unit (3) of the liquid crystal polyester is preferably 35 mol% or less, more preferably 10 to 35 mol%, even more preferably 15 to 35 mol%, and especially preferably 17.5 to 32.5 mol%, based on the total amount of all the structural units constituting the liquid crystal polyester.

In the liquid crystal polyester, the proportion of the content of the structural unit (2) to the content of the structural unit (3) is, when expressed as [content of structural unit (2)]/[content of structural unit (3)] (mol/mol), preferably 0.9 or more and 1.1 or less, more preferably 0.95 or more and 1.05 or less, and even more preferably 0.98 or more and 1.02 or less.

In the liquid crystal polyester, the proportion of the content of the structural unit (3) to the content of the structural unit (1) is, when expressed as [content of structural unit (3)]/[content of structural unit (1)] (mol/mol), preferably 0.2 or more and 1.0 or less, more preferably 0.25 or more and 0.85 or less, and even more preferably 0.3 or more and 0.75 or less.

The liquid crystal polyester may have only one of each of the structural units (1) to (3), independently, or may have two or more thereof. In addition, the liquid crystal polyester may have one or more than two structural units other than the structural units (1) to (3), and the content thereof is preferably 10 mol% or less, and more preferably 5 mol% or less, based on the total amount of all the structural units of the liquid crystal polyester.

In the present embodiment, it is also possible to use a liquid crystal polyester mixture in which a plurality of liquid crystal polyesters are mixed.

Here, the liquid crystal polyester resin mixture is a mixture of liquid crystal polyester resins different from each other in flow starting temperature. In the liquid crystal polyester resin mixture, the liquid crystal polyester resin having the highest flow starting temperature is referred to as the first liquid crystal polyester resin, and the liquid crystal polyester resin having the lowest flow starting temperature is referred to as the second liquid crystal polyester resin. A liquid crystal polyester resin mixture consisting substantially of the first liquid crystal polyester and the second liquid crystal polyester is preferable.

In addition, in the liquid crystal polyester mixture, the content of the second liquid crystal polyester is preferably 10 to 150 parts by mass, more preferably 30 to 120 parts by mass, and even more preferably 50 to 100 parts by mass, based on 100 parts by mass of the first liquid crystal polyester.

### (Method for producing liquid crystal polyester)

Next, one example of a method for producing the liquid crystal polyester according to the present embodiment will be described.

The liquid crystal polyester of the present embodiment is preferably produced by the following acylation step and polymerization step.

The acylation step is a step of obtaining an acylated product by acylating a phenolic hydroxy group contained in a raw material monomer with a fatty acid anhydride (for example, acetic anhydride).

In the polymerization step, a liquid crystal polyester may be obtained by polymerizing an acyl group of the acylated product obtained in the acylation step and carboxy groups of acylated products of an aromatic dicarboxylic acid and an aromatic hydroxycarboxylic acid in such a way as to cause ester exchange.

The acylation step and the polymerization step may be carried out in the presence of a heterocyclic organic base compound represented by the following formula (5).

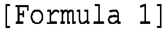

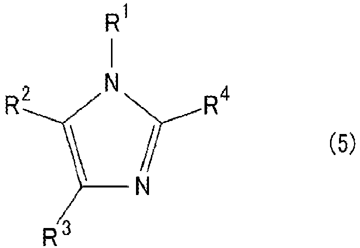

In the above formula (5), R¹ to R⁴ each independently represent a hydrogen atom, an alkyl group having 1 to 4 carbon atoms, a hydroxymethyl group, a cyano group, and a cyanoalkyl group having an alkyl group having 1 to 4 carbon atoms, a cyanoalkoxy group having an alkoxy group having 1 to 4 carbon atoms, a carboxy group, an amino group, an aminoalkyl group having 1 to 4 carbon atoms, an aminoalkoxy group having 1 to 4 carbon atoms, a phenyl group, a benzyl group, a phenylpropyl group, or a formyl group.

The heterocyclic organic base compound of the above formula (5) is preferably an imidazole derivative in which R¹ is an alkyl group having 1 to 4 carbon atoms and R² to R⁴ are each a hydrogen atom. Thereby, the reactivity of the acylation reaction in the acylation step and the ester exchange reaction in the polymerization step can be further improved. In addition, the color tone of the liquid crystal polyester film obtained by using the liquid composition of the present embodiment can be further improved.

Among the heterocyclic organic base compounds, one or both of 1-methylimidazole and 1-ethylimidazole is particularly preferable because these are easily available.

In addition, the amount of the heterocyclic organic base compound used is preferably 0.005 to 1 part by mass when the total amount of the raw material monomers of the liquid crystal polyester (that is, an aromatic dicarboxylic acid, an aromatic diol, and an aromatic hydroxycarboxylic acid) is 100 parts by mass. In addition, from the viewpoint of the color tone and the productivity of the molded product, the amount of the heterocyclic organic base compound used is more preferably 0.05 to 0.5 parts by mass based on 100 parts by mass of the raw material monomers.

The heterocyclic organic basic compound may be present for a period of time during the acylation reaction and the ester exchange reaction, and the time of addition thereof may be immediately before the start of the acylation reaction or in the middle of the acylation reaction or between the acylation reaction and the ester exchange reaction. The liquid crystal polyester thus obtained has very high melt flowability and excellent thermal stability.

The amount of the fatty acid anhydride (for example, acetic anhydride) used should be determined in consideration of the amount of the aromatic diol and the aromatic hydroxycarboxylic acid used as raw material monomers. Specifically, based on the total equivalents of the phenolic hydroxy groups included in these raw material monomers, the amount of the fatty acid anhydride used is preferably 1.0 times equivalents or more and 1.2 times equivalents or less, more preferably 1.0 times equivalents or more and 1.15 times equivalents or less, even more preferably 1.03 times equivalents or more and 1.12 times equivalents or less, and particularly preferably 1.05 times equivalents or more and 1.1 times equivalents or less.

When the amount of the fatty acid anhydride used is 1.0 times equivalents or more based on the total equivalents of the phenolic hydroxy groups included in the raw material monomers, the acylation reaction is likely to proceed, and the unreacted raw material monomers are unlikely to remain in the subsequent polymerization step, and as a result, the polymerization proceeds efficiently. In addition, when the acylation reaction proceeds sufficiently as described above, there is little possibility that the unacylated raw material monomers sublimate and the fractionator used at the time of the polymerization is clogged. On the other hand, when the amount of the fatty acid anhydride used is 1.2 times equivalents or less, the liquid crystal polyester obtained is unlikely to be colored.

The acylation reaction in the above acylation step is preferably carried out in the temperature range between 130°C and 180°C for 30 minutes to 20 hours, and more preferably carried out between 140°C and 160°C for 1 to 5 hours.

The aromatic dicarboxylic acid used in the above polymerization step may be present in the reaction system during the acylation step. That is, in the acylation step, the aromatic diol, the aromatic hydroxycarboxylic acid, and the aromatic dicarboxylic acid may be present in the same reaction system. This is because neither the carboxy group nor the substituent optionally substituted in the aromatic dicarboxylic acid is affected by the fatty acid anhydride.

Therefore, a method of charging the aromatic diol, the aromatic hydroxycarboxylic acid, and the aromatic dicarboxylic acid into a reactor and then sequentially carrying out the acylation step and the polymerization step may be used, or a method of charging the aromatic diol and the aromatic dicarboxylic acid into a reactor to carry out the acylation step and then even more charging the aromatic dicarboxylic acid into the reactor to carry out the polymerization step may be used. The former method is preferable from the viewpoint of simplifying the production step.

The ester exchange reaction in the above polymerization step is preferably carried out while raising the temperature from 130°C to 400°C at a temperature increase rate between 0.1 and 50°C/min, and even more preferably carried out while raising the temperature from 150°C to 350°C at a temperature increase rate between 0.3 and 5°C/min.

In addition, when carrying out the ester exchange reaction in the polymerization step, in order to shift the equilibrium, a fatty acid (for example, acetic acid) generated as a byproduct and the unreacted fatty acid anhydride (for example, acetic anhydride) are preferably evaporated and distilled out of the system. At this time, by refluxing a part of the distilled fatty acid back to the reactor, the raw material monomers or the like that evaporate or sublimate together with the fatty acid can also be condensed or reverse sublimated back to the reactor.

In the acylation reaction in the acylation step and the ester exchange reaction in the polymerization step, a batch apparatus may be used or a continuous apparatus may be used as the reactor. A liquid crystal polyester that can be used in the present embodiment can be obtained even by using any of the reaction apparatuses.

By carrying out pulverization after the above polymerization step, the target fine powder can be obtained. By carrying out a heat-treatment or the like after the polymerization step, the liquid crystal polyester resin obtained in this polymerization step can also be increased in molecular weight, but in consideration of the pulverizability of the liquid crystal polyester before pulverization, it is desirable not to carry out the step of increasing the molecular weight such as a heat-treatment or the like.

The liquid crystal polyester having the suitable flow starting temperature described above can be easily obtained by appropriately optimizing the structural units constituting the liquid crystal polyester. That is, if the linearity of the molecular chain of the liquid crystal polyester is improved, the flow starting temperature thereof tends to increase.

For example, the structural unit derived from terephthalic acid improves the linearity of the liquid crystal polyester molecular chain. On the other hand, the structural unit derived from isophthalic acid improves the flexibility (lowers the linearity) of the liquid crystal polyester molecular chain. Therefore, by controlling a copolymerization ratio of terephthalic acid and isophthalic acid, a liquid crystal polyester having a desired flow starting temperature can be obtained.

When the above liquid crystal polyester mixture is used, at least one liquid crystal polyester is preferably a polymer obtained by polymerizing raw material monomers comprising an aromatic hydroxycarboxylic acid in the presence of an imidazole compound. The liquid crystal polyester thus obtained has very high flowability at the time of melting and excellent thermal stability.

In addition, in the liquid crystal polyester used in the present embodiment, it is preferable to optimize the copolymerization ratio of terephthalic acid and isophthalic acid. Thereby, as described above, the linearity of the molecular chain of the liquid crystal polyester can be controlled. As a result, it is possible to produce each of a plurality of liquid crystal polyesters different from each other in flow starting temperature.

The number average molecular weight of the liquid crystal polyester in the liquid crystal polyester powder according to the embodiment is preferably 10000 or less, more preferably 3000 to 10000, even more preferably 4000 to 8000, and particularly preferably 5000 to 7000. When the number average molecular weight of the liquid crystal polyester in the liquid crystal polyester powder is 10000 or less, it is easy to process the same into a film having excellent isotropy. In addition, the smaller the number average molecular weight of the liquid crystal polyester is, the better the thermal conductivity in the thickness direction of the film after heat-treatment tends to be, which is preferable, and when the number average molecular weight of the liquid crystalline polyester is equal to or greater than the above lower limit value, the heat resistance, the strength, and the rigidity of the film after heat-treatment are good.

In the present description, the "number average molecular weight" is an absolute value measured using a gel permeation chromatograph-multi-angle light scattering photometer.

The liquid crystal polyester in the liquid crystal polyester powder according to the embodiment has a flow starting temperature of preferably 240°C or more, more preferably 250°C or more and 350°C or less, and even more preferably 260°C or more and 330°C or less. The higher the flow starting temperature of the liquid crystal polyester, the easier it is to improve the heat resistance, the strength, and rigidity, but if the flow starting temperature is too high, the pulverizability deteriorates and it becomes difficult to obtain a powder having a target particle diameter.

The flow starting temperature, also referred to as flow temperature or flow start temperature, is a temperature showing a viscosity of 4800 Pa•s (48000 poises) when a liquid crystal polyester is melted while raising the temperature at a rate of 4°C/min under a load of 9.8 MPa (100 kg/cm²) using a capillary rheometer and extruded from a nozzle having an inner diameter of 1 mm and a length of 10 mm, and serves as a guide for the molecular weight of the liquid crystal polyester (see "Liquid Crystal Polymer -Synthesis/Molding/Application-," edited by Naoyuki Koide, CMC Publishing Co., Ltd., June 5, 1987, p. 95).

### <Medium>

The liquid composition of the embodiment comprises a medium. The "medium" included in the liquid composition of the embodiment refers to a substance that is in a liquid state at 1 atm and 25°C. In the present description, a composition in which the medium is in a liquid state is referred to as a "liquid composition." The medium is preferably a volatile component that is a substance that can be volatilized during the producing of a liquid crystal polyester film.

The medium is preferably a dispersion medium that disperses a liquid crystal polyester powder that is insoluble.

The liquid composition of the embodiment is preferably a dispersion in which the liquid crystal polyester powder is insoluble in the medium and the liquid crystal polyester powder is dispersed in the medium that is a liquid.

The "dispersion" here refers to a state in which the liquid crystal polyester powder floats or is suspended in the dispersion medium, and is a term used to distinguish the above state from a state in which the liquid crystal polyester powder is dissolved (except for a state in which the liquid crystal polyester powder is completely dissolved in the liquid composition). The distribution of the liquid crystal polyester powder in the composition may have a non-uniform part. The state of the liquid crystal polyester powder in the composition may be a state in which the liquid composition can be applied onto a support in the method for producing a liquid crystal polyester film described later.

Examples of the medium include an aliphatic polyhydric alcohol such as glycerin, neopentyl glycol, ethylene glycol, propylene glycol, butanediol, hexylene glycol, polyethylene glycol, or polypropylene glycol; a halogenated hydrocarbon such as dichloromethane, chloroform, 1,1-dichloroethane, 1,2-dichloroethane, 1,1,2,2-tetrachloroethane, 1-chlorobutane, chlorobenzene, or o-dichlorobenzene; a halogenated phenol such as p-chlorophenol, pentachlorophenol, or pentafluorophenol; an ether such as diethyl ether, di-(2-chloroethyl)ether, tetrahydrofuran, or 1,4-dioxane; a ketone such as acetone, cyclohexanone, or isophorone; an ester such as ethyl acetate, butyl lactate, and γ-butyrolactone; a carbonate such as ethylene carbonate or propylene carbonate; an amine such as triethylamine; a nitrogen-containing heterocyclic aromatic compound such as pyridine; a nitrile such as acetonitrile or succinonitrile; an amide such as N,N-dimethylformamide, N,N-dimethylacetamide, or N-methylpyrrolidone, a urea compound such as tetramethylurea; a nitro compound such as nitromethane or nitrobenzene; a sulfur compound such as dimethylsulfoxide or sulfolane; and a phosphorus compound such as hexamethylphosphoramide or tri n-butyl phosphate, and two or more of these may be used.

The liquid composition of the embodiment comprises a medium having a specific gravity of 0.90 or more as a medium having excellent dispersibility of the liquid crystal polyester powder.

In the present description, the "specific gravity" of a medium is one determined as measured in accordance with JIS Z 8804: 2012 (hydrometer) using water as a reference substance. The specific gravity here is defined as the density of a sample liquid divided by the density of water under a pressure of 101325 Pa (1 atm).

The liquid composition of the embodiment comprises a medium having a specific gravity of 0.90 or more, preferably comprises a medium having a specific gravity of 0.95 or more, more preferably comprises a medium having a specific gravity of 1.03 or more, even more preferably comprises a medium having a specific gravity of 1.1 or more, and particularly preferably comprises a medium having a specific gravity of 1.3 or more. When the specific gravity of the medium is equal to or greater than the above lower limit value, the dispersibility of the liquid crystal polyester powder is excellent.

The upper limit value of the specific gravity may be 1.84 or less as one example. The liquid composition of the embodiment may comprise a medium having a specific density of 1.84 or less, a medium having a specific gravity of 1.68 or less, a medium having a specific gravity of 1.58 or less, or a medium having a specific gravity of 1.48 or less. When the specific gravity of the medium is equal to or less than the above upper limit value, the liquid crystal polyester powder is prevented from floating on the liquid surface of the medium and becoming difficult to disperse.

One of the above upper limit values and one of the above lower limit values of a value of the specific gravity of the medium can be freely combined. As one example of the numerical range of a value of the specific gravity of the above medium, the liquid composition of the embodiment may comprise a medium having a specific gravity of 0.90 or more and 1.84 or less, a medium having a specific gravity of 0.95 or more and 1.68 or less, a medium having a specific gravity of 1.03 or more and 1.58 or less, or a medium having a specific gravity of 1.1 or more and 1.48 or less.

The improvement in the dispersibility of the liquid crystal polyester powder is largely due to the specific gravity of the medium as described above, and in addition, the affinity (the property of the mixed state being likely to be made uniform) at the interface between the liquid crystal polyester and the medium becomes also a preferable factor.

As shown in the Examples below, the present inventors have found that propylene glycol, ethylene glycol, butanediol, N-methyl-2-pyrrolidone, butyl lactate, di-(2-chloroethyl) ether, dichloromethane, sulfolane, cyclohexanone, and isophorone are mediums having excellent affinity for the liquid crystal polyester powder. This finding does not necessarily match the tendency in a solubility parameter, and a medium having excellent affinity for the liquid crystal polyester powder has been a difficult one to be predicted.

That is, the liquid composition of the embodiment preferably comprises at least one medium selected from the group consisting of propylene glycol, ethylene glycol, butanediol, N-methyl-2-pyrrolidone, butyl lactate, di-(2-chloroethyl) ether, dichloromethane, sulfolane, cyclohexanone, and isophorone. The specific gravity of these media is 0.90 or more.

A medium having excellent affinity for the liquid crystal polyester powder has excellent dispersibility of the liquid crystal polyester powder.

The liquid composition of the embodiment preferably comprises:
at least one copolymer selected from the group consisting of 1) to 34) given as the specific examples of the preferable liquid crystal polyester described above; and
at least one medium selected from the group consisting of propylene glycol, ethylene glycol, butanediol, N-methyl-2-pyrrolidone, butyl lactate, di-(2-chloroethyl) ether, dichloromethane, sulfolane, cyclohexanone, and isophorone.

From the viewpoint of excellent dispersibility of the liquid crystal polyester and also an excellent effect of suppressing the sedimentation of the liquid crystal polyester powder, the liquid composition of the embodiment preferably comprises at least one medium selected from the group consisting of propylene glycol, ethylene glycol, butanediol, N-methyl-2-pyrrolidone, butyl lactate, di-(2-chloroethyl) ether, dichloromethane, and sulfolane among the media given above as examples.

From the viewpoint of excellent dispersibility of the liquid crystal polyester and also a superior effect of suppressing the sedimentation of the liquid crystal polyester powder, the liquid composition of the embodiment preferably comprises at least one medium selected from the group consisting of propylene glycol, ethylene glycol, butanediol, dichloromethane, and sulfolane among the media given above as examples.

From the viewpoint of excellent dispersibility of the liquid crystal polyester and a superior effect of suppressing sedimentation of the liquid crystal polyester powder, the viscosity of the medium measured between 20 and 25°C is preferably 10 mPa·s or more. Examples of the medium satisfying the above specification include propylene glycol, ethylene glycol, butanediol, and sulfolane.

From the same viewpoint, the liquid composition of the embodiment preferably comprises a medium having a viscosity measured between 20 and 25°C of 10 mPa·s or more and 200 mPa·s or less, more preferably comprises a medium having a viscosity thus measured of 10 mPa·s or more and 150 mPa·s or less, even more preferably comprises a medium having a viscosity thus measured of 12 mPa·s or more and 100 mPa·s or less, and even more preferably comprises a medium having a viscosity thus measured of 15 mPa·s or more and 80 mPa·s or less.

The viscosity of the medium is measured between 20 and 25°C in accordance with the method specified in JIS Z 8803.

The medium is preferably a medium comprising a compound having a boiling point of 220°C or less at 1 atm as a main component because the medium can be easily removed during the producing of the film, and the proportion of a compound having a boiling point at 1 atm of 220°C or less in the entire medium is preferably 50 to 100% by mass, more preferably 70 to 100% by mass, and even more preferably 90 to 100% by mass.

In the liquid composition of the embodiment, the difference in specific gravity between the specific gravity of the liquid crystal polyester powder measured by JIS K 7112 (method A) using water as a reference substance and the specific density of the medium measured in accordance with JIS Z 8804 using water as a reference substance is preferably within 0.48. The smaller the difference in specific gravity between the liquid crystal polyester powder and the medium, the better the dispersibility of the liquid crystal polyester tends to be. The difference in specific gravity is preferably within 0.48, preferably within 0.46, more preferably within 0.4, even more preferably within 0.36, and particularly preferably within 0.15.

As a measurement sample of the liquid crystal polyester powder measured by JIS K 7112 (method A) using water as a reference substance, one obtained by molding the liquid crystal polyester powder as follows is used.

A heat-treatment that heats a liquid crystal polyester powder whose specific gravity is to be measured (however, the particle diameter of the powder may be different from that included in the liquid composition if the specific gravity can be measured) under a nitrogen atmosphere is carried out. The heat-treatment temperature is set between 260°C and 300°C, which is the temperature at which solid phase polymerization of the liquid crystal polyester occurs, in order to improve the moldability for preparing the measurement sample. Next, using a twin-screw extruder (for example, PCM-30 manufactured by Ikegai Ironworks Corp.), melt kneading is carried out at a die head temperature between 300°C and 345°C and a screw rotation speed of 150 rpm to carry out granulation to obtain a pellet of the liquid crystal polyester. After that, using an injection molding machine (for example, PNX40 manufactured by Nissei Plastic Industrial Co., Ltd.), the pellet is injection molded at a cylinder temperature between 310°C and 350°C and a mold temperature of 130°C and molded into a plate shape of 64 mm × 64 mm × 3 mm, and this is used as a measurement sample.

Either the liquid crystal polyester powder or the medium may have a larger specific density than the other. The value of the above difference in specific density may be a value of "the specific density of the liquid crystal polyester powder - the specific gravity of the medium (provided that the specific density of the liquid crystal polyester powder ≥ the specific gravity of the medium)" or a value of "the specific gravity of the medium - the specific gravity of the liquid crystal polyester powder (provided that the value of "the specific gravity of the medium ≥ the specific density of the liquid crystal polyester powder). From the viewpoint of easy preparation of the liquid composition, the specific gravity of the liquid crystal polyester powder is preferably larger than the specific gravity of the medium. When the specific gravity of the liquid crystal polyester powder is larger than the specific gravity of the medium, the liquid crystal polyester powder is prevented from floating on the liquid surface of the medium and becoming difficult to disperse.

The specific gravity of the liquid crystal polyester powder according to the embodiment measured by JIS K 7112 (method A) using water as a reference substance can be 1.35 or more and 1.40 or less as one example.

The proportion of the content of the medium based on the total mass of the liquid composition of the embodiment is preferably 50 to 99% by mass, more preferably 60 to 95% by mass, and even more preferably 70 to 90% by mass.

The proportion of the content of the liquid crystal polyester powder of the embodiment based on the total mass of the liquid composition of the embodiment is preferably 0.1 to 50% by mass, more preferably 3 to 40% by mass, and even more preferably 5 to 30% by mass.

The upper limit value and the lower limit value of one of the numerical ranges of the content of the medium given above as examples and the upper limit value and the lower limit value of one of the numerical ranges of the content of the liquid crystal polyester powder given above as examples can be freely combined.

As one example, it is possible to give a liquid composition wherein the proportion of the content of the medium based on the total mass of the liquid composition of the embodiment is 50 to 99% by mass, and the proportion of the content of the liquid crystal polyester powder of the embodiment thereto is 0.1 to 50% by mass.

As one example, it is possible to give a liquid composition wherein the proportion of the content of the medium based on the total mass of the liquid composition of the embodiment is 60 to 95% by mass, and the proportion of the content of the liquid crystal polyester powder of the embodiment thereto is 3 to 40% by mass.

As one example, it is possible to give a liquid composition wherein the proportion of the content of the medium based on the total mass of the liquid composition of the embodiment is 70 to 90% by mass, and the proportion of the content of the liquid crystal polyester powder of the embodiment thereto is 5 to 30% by mass.

The proportion of the medium of the embodiment satisfying the specifications of the specific gravity, specific gravity difference, and viscosity given above as an example based on the total mass of the medium included in the liquid composition of the embodiment is preferably 50 to 100% by mass, more preferably 70 to 100% by mass, and even more preferably 90 to 100% by mass.

The proportion of at least one medium selected from the group consisting of propylene glycol, ethylene glycol, butanediol, N-methyl-2-pyrrolidone, butyl lactate, di-(2-chloroethyl) ether, dichloromethane, sulfolane, cyclohexanone, and isophorone based on the total mass of the medium included in the liquid composition of the embodiment is preferably 50 to 100% by mass, more preferably 70 to 100% by mass, and even more preferably 90 to 100% by mass.

The liquid composition of the embodiment may comprise a liquid component other than the medium. The proportion of the medium according to the embodiment satisfying the specifications of the specific gravity, specific gravity difference, viscosity, and the like given above as an example based on the total mass of the liquid component is preferably 70 to 100% by mass, more preferably 80 to 100% by mass, and even more preferably 90 to 100% by mass.

The proportion of the liquid crystal polyester powder based on the total amount of solids included in the liquid composition may be 50 to 100% by mass, 70 to 100% by mass, or 90 to 100% by mass, as one example.

The "solids" included in the liquid composition of the embodiment refer to non-volatile components except for a substance that can be volatilized during the formation of the liquid crystal polyester film.

The proportion of the liquid crystal polyester powder included in the liquid composition is preferably 0.1 to 60 parts by mass, more preferably 1 to 50 parts by mass, even more preferably 3 to 40 parts by mass, and particularly preferably 5 to 30 parts by mass, based on 100 parts by mass in total of the liquid crystal polyester powder and the medium.

The liquid composition may comprise one or more other components such as a filler, an additive, and a resin other than the liquid crystal polyester.

However, the liquid composition preferably does not comprise a thickener. In the present description, the "thickener" refers to a substance that increases the viscosity of the medium when added to the liquid composition. The medium is not encompassed by the thickener. In addition, the liquid composition preferably does not comprise an emulsifier.

Examples of the filler include an inorganic filler such as silica, alumina, titanium oxide, barium titanate, strontium titanate, aluminum hydroxide, or calcium carbonate; and an organic filler such as cured epoxy resin, crosslinked benzoguanamine resin, or crosslinked acrylic resin, and the content thereof may be 0 based on 100 parts by mass of the liquid crystal polyester and is preferably 100 parts by mass or less.

Examples of the additive include a leveling agent, an antifoaming agent, an antioxidant, an ultraviolet absorbing agent, a flame retardant, and a colorant, and the content thereof may be 0 based on 100 parts by mass of the liquid crystal polyester and is preferably 5 parts by mass or less.

Examples of the resin other than the liquid crystal polyester include polypropylene, polyamide, a polyester other than the liquid crystal polyester, polyphenylene sulfide, polyether ketone, polycarbonate, polyether sulfone, polyphenylene ether and a modified product thereof, a thermoplastic resin other than the liquid crystal polyester such as polyetherimide; an elastomer such as a copolymer of glycidyl methacrylate and polyethylene; and a thermosetting resin such as a phenol resin, an epoxy resin, a polyimide resin, or a cyanate resin, and the content thereof is may be 0 based on 100 parts by mass of the liquid crystal polyester and is preferably 20 parts by mass or less.

The liquid composition of the embodiment may comprise more than 70% by mass and 100% by mass or less of the above liquid crystal polyester of the embodiment, or may comprise 80 to 100% by mass of the same, based on 100% by mass in total of the liquid crystal polyesters included. Examples of the above liquid crystal polyester include those given as examples in the liquid crystal polyester powder according to the embodiment, and among the liquid crystal polyesters described in the section of (Liquid crystal polyester) of the above embodiment, the above liquid crystal polyester may be a liquid crystal polyester that does not correspond to the following component (X), and examples thereof include a liquid crystal polyester having a structural unit represented by the above formula (1), and a liquid crystal polyester having a structural unit represented by the above formula (1), a structural unit represented by the above formula (2), and a structural unit represented by the above formula (3). At least one copolymer selected from the group consisting of 1) to 34) given as the specific examples of the preferable liquid crystal polyester described above can also be given as an example.

The liquid composition of the embodiment may be one comprising a medium and a liquid crystal polyester powder (provided that the content of a liquid crystal polyester soluble in the medium is less than 5% by mass based on 100% by mass in total of the liquid crystal polyesters).

The liquid composition of the embodiment may be one comprising a medium and a liquid crystal polyester powder (except for one comprising a liquid crystal polyester soluble in the medium).

The liquid composition of the embodiment may be one comprising a medium and a liquid crystal polyester powder (provided that the content of a liquid crystal polyester soluble in an aprotic solvent (medium) is less than 5% by mass based on 100% by mass in total of the liquid crystal polyesters).

The liquid composition of the embodiment may be one comprising a medium and a liquid crystal polyester powder (except for one comprising a liquid crystal polyester soluble in an aprotic solvent (medium) when a liquid crystal polyester powder is included as a resin powder).

The liquid crystal polyester soluble in an aprotic solvent may be a liquid crystal polyester comprising a structural unit derived from acetaminophen.

The liquid crystal polyester soluble in an aprotic solvent may be a liquid crystal polyester consisting of a structural unit derived from 6-hydroxy-2-naphthoic acid, a structural unit derived from acetaminophen, and a structural unit derived from isophthalic acid.

The liquid crystal polyester soluble in an aprotic solvent may also be a liquid crystal polyester that is a polymer obtained by reacting a mixture of 6-hydroxy-2-naphthoic acid (5.0 mol), acetaminophen (2.5 mol), isophthalic acid (2.5 mol), and acetic anhydride (8.4 mol) .

Hereinafter, the liquid crystal polyester soluble in an aprotic solvent will be described.

### <<Component (X)>>

The component (X) is a liquid crystalline polyester soluble in an aprotic solvent. Here, being "soluble in an aprotic solvent" can be confirmed by carrying out the following test.

### ● Test method

The liquid crystalline polyester is stirred in an aprotic solvent at a temperature between 120°C and 180°C for 1 hour to 6 hours, and then cooled to room temperature (23°C). Next, filtration is carried out using a 5 µm membrane filter and a pressurized filtration machine, and then whether or not there is a residue on the membrane filter is checked. At this time, when no solid is found, it is determined that the liquid crystalline polyester is soluble in the aprotic solvent.

More specifically, 1 part by mass of the liquid crystalline polyester is stirred in 99 parts by mass of an aprotic solvent at 140°C for 4 hours, and then cooled to 23°C. Next, filtration is carried out using a 5 µm membrane filter and a pressurized filtration machine, and then whether or not there is a residue on the membrane filter is checked. At this time, when no solid is found, it is determined that the liquid crystalline polyester is soluble in the aprotic solvent.

The liquid crystalline polyester (X) preferably comprises structural units represented by the following formulas (X1), (X2), and (X3) as structural units.

As one aspect, the content of the structural unit represented by the formula (X1) is 30 to 80 mol%, the content of the structural unit represented by the formula (X2) is 35 to 10 mol%, and the content of the structural unit represented by the formula (X3) is 35 to 10 mol%, based on the total content of all the structural units constituting the component (X).

However, the total content of the structural unit represented by the formula (X1), the structural unit represented by the formula (X2), and the structural unit represented by the formula (X3) does not exceed 100 mol%.

(X1) -O-Ar1'-CO-

(X2) -CO-Ar2'-CO-

(X3) -X-Ar3'-Y-

wherein Ar1' represents a 1,4-phenylene group, a 2,6-naphthylene group, or a 4,4'-biphenylene group; Ar2' represents a 1,4-phenylene group, a 1,3-phenylene group, or a 2,6-naphthylene group; Ar3' represents a 1,4-phenylene group or a 1,3-phenylene group; X is -NH-; and Y represents -O- or NH-.

The structural unit (X1) is a structural unit derived from an aromatic hydroxycarboxylic acid, the structural unit (X2) is a structural unit derived from an aromatic dicarboxylic acid, and the structural unit (X3) is a structural unit derived from an aromatic diamine or an aromatic amine having a phenolic hydroxyl group. The component (X) may use an ester or amide-forming derivative of the above structural unit instead of the above structural unit.

In the present embodiment, preferably, the Ar1' is a 2,6-naphthylene group, the Ar2' is a 1,3-phenylene group, the Ar3' is a 1,4-phenylene group, and the Y is - O-.

Examples of an ester-forming derivative of a carboxylic acid include one in which the carboxy group is converted into a derivative having high reaction activity such as an acid chloride or an acid anhydride that promotes a polyester-generating reaction, and one in which the carboxy group forms an ester with an alcohol, ethylene glycol, or the like that generates a polyester by an ester exchange reaction.

Examples of an ester-forming derivative of a phenolic hydroxyl group include one in which the phenolic hydroxyl group forms an ester with a carboxylic acid.

Examples of an amide-forming derivative of an amino group include one in which the amino group forms an amide with a carboxylic acid.

Examples of the structural units of the component (X) used in the present embodiment include, but are not limited to, the following.

Examples of the structural unit represented by the formula (X1) include a structural unit derived from p-hydroxybenzoic acid, 6-hydroxy-2-naphthoic acid, or 4'-hydroxy-4-biphenylcarboxylic acid, and two or more of the structural units may be included in all the structural units. It is preferable to use a component (X) comprising the structural unit derived from 6-hydroxy-2-naphthoic acid among these structural units.

The content of the structural unit (X1) is 30 mol% or more and 80 mol% or less, preferably 40 mol% or more and 70 mol% or less, and more preferably 45 mol% or more and 65 mol% or less, based on the content of all the structural units constituting the component (X).

When the content of the structural unit (X1) is high, the solubility in a solvent tends to decrease remarkably, and when the content thereof is too low, the liquid crystallinity tends not to be exhibited. That is, when the content of the structural unit (X1) is within the above range, the solubility in a solvent is good and the liquid crystallinity is easily exhibited.

Examples of the structural unit represented by the formula (X2) include a structural unit derived from terephthalic acid, isophthalic acid, or 2,6-naphthalenedicarboxylic acid, and two or more of the structural units may be included in all the structural units. It is preferable to use a liquid crystalline polyester comprising a structural unit derived from isophthalic acid among these structural units from the viewpoint of solubility in a solvent.

The content of the structural unit (X2) is preferably 10 mol% or more and 35 mol% or less, more preferably 15 mol% or more and 30 mol% or less, and particularly preferably 17.5 mol% or more and 27.5 mol% or less, based on the content of all the structural units constituting the component (X). When the content of the structural unit (X2) is too high, the liquid crystallinity tends to decrease, and when the content thereof is low, the solubility in a solvent tends to decrease. That is, when the content of the structural unit (X2) is within the above range, the liquid crystallinity is good and the solubility in a solvent is also good.

Examples of the structural unit represented by the formula (X3) include a structural unit derived from 3-aminophenol, 4-aminophenol, 1,4-phenylenediamine, or 1,3-phenylenediamine, and two or more of the structural units may be included in all the structural units. It is preferable to use a liquid crystalline polyester comprising a structural unit derived from 4-aminophenol among these structural units from the viewpoint of reactivity.

The content of the structural unit (X3) is preferably 10 mol% or more and 35 mol% or less, more preferably 15 mol% or more and 30 mol% or less, and particularly preferably 17.5 mol% or more and 27.5 mol% or less, based on the content of all the structural units constituting the component (X). When the content of the structural unit (X3) is too high, the liquid crystallinity tends to decrease, and when the content thereof is low, the solubility in a solvent tends to decrease. That is, when the content of the structural unit (X3) is within the above range, the liquid crystallinity is good and the solubility in a solvent is also good.

The structural unit (X3) is preferably used in substantially the same amount as the structural unit (X2), and by setting the content of the structural unit (X3) between 10 mol% lower and 10 mol% higher than the content of the structural unit (X2), the degree of polymerization of the liquid crystalline polyester can also be controlled.

The liquid crystalline polyester can be produced by using, for example, a batch apparatus or a continuous apparatus.

When the liquid crystalline polyester (X) is made into the form of a powder, the volume average particle diameter is preferably 100 to 2000 µm. The volume average particle diameter of the liquid crystalline polyester (X) in the form of a powder can be measured by a dry sieving method (for example, RPS-105 manufactured by Seishin Enterprise Co., Ltd.).

As one aspect, the content of the component (X) is preferably 5 to 10% by mass based on the total mass of the liquid crystalline polyester liquid composition.

### [Production Example of liquid crystalline polyester (X)]

Into a reactor equipped with a stirrer, a torque meter, a nitrogen gas introduction tube, a thermometer, and a reflux condenser are added 940.9 g (5.0 mol) of 6-hydroxy-2-naphthoic acid, 377.9 g (2.5 mol) of acetaminophen, 415.3 g (2.5 mol) of isophthalic acid, and 867.8 g (8.4 mol) of acetic anhydride. The gas in the reactor is replaced with nitrogen gas, and then while stirring in a nitrogen gas stream, the temperature is raised from room temperature (23°C) to 140°C over 60 minutes and the resulting mixture is refluxed at 140°C for 3 hours. Next, while distilling off by-produced acetic acid and unreacted acetic anhydride, the temperature is raised from 150°C to 300°C over 5 hours and held at 300°C for 30 minutes, and then the contents are taken out from the reactor and cooled to room temperature (23°C). The obtained solid is pulverized using a pulverizer, and then a liquid crystalline polyester (X-1) in the form of a powder can be obtained. The flow starting temperature of this liquid crystalline polyester (X-1) may be 193.3°C.

A liquid crystalline polyester (X-2) in the form of a powder can be obtained by, in a nitrogen atmosphere, raising the temperature of the liquid crystalline polyester (X-1) from room temperature (23°C) to 160°C over 2 hours and 20 minutes, next raising the temperature from 160°C to 180°C over 3 hours and 20 minutes, and holding the temperature at 180°C for 5 hours to thereby cause solid phase polymerization, then cooling the resulting product to 23°C, and next pulverizing the same using a pulverizer. The flow starting temperature of this liquid crystalline polyester (X-2) may be 220°C.

A liquid crystalline polyester (X) in the form of a powder having a volume average particle diameter of 871 µm can be obtained by, in a nitrogen atmosphere, raising the temperature of the liquid crystalline polyester (X-2) from room temperature to 180°C over 1 hour and 25 minutes, next raising the temperature from 180°C to 255°C over 6 hours and 40 minutes, and holding the temperature at 255°C for 5 hours to thereby cause solid phase polymerization, and then cooling the resulting product to 23°C. The volume average particle diameter of the liquid crystal polyester (X) is measured using RPS-105 manufactured by Seishin Enterprise Co., Ltd. The flow starting temperature of the liquid crystalline polyester (X) may be 302°C.

A liquid crystal polyester solution (X') can be prepared by adding 8 parts by mass of the liquid crystal polyester (X) to 92 parts by mass of N-methylpyrrolidone (boiling point (1 atm) of 204°C) and stirring the resulting mixture at 140°C for 4 hours in a nitrogen atmosphere. The viscosity of this liquid crystal polyester solution (X') may be 955 mPa·s.

According to the liquid composition comprising the liquid crystal polyester powder of the embodiment, it is possible to produce a liquid crystal polyester film having suitable quality as a film for an electronic part. Examples of the quality standard therefor include the isotropy and the thickness of the film.

According to the liquid composition comprising the liquid crystal polyester powder of the embodiment, it is possible to produce a liquid crystal polyester film having excellent isotropy.

Conventionally, the liquid crystal polyester film is generally produced by a melt forming method or a casting method of melting a liquid crystal polyester.

The melt forming method is a method for forming a film by extruding a kneaded product from an extruder. However, in the film produced by the melt forming method, the liquid crystal polyester molecules are oriented in a film formation direction (also referred to as an extrusion direction, Machine Direction (MD)) rather than a direction transverse to the extrusion direction (direction perpendicular to the extrusion direction and the thickness direction of the film, Transverse Direction (TD)), and it is difficult to obtain a liquid crystal polyester film having excellent isotropy.

The liquid crystal polyester powder according to the embodiment is suitable as a raw material for a method for producing a liquid crystal polyester film described later, and by applying this method, a liquid crystal polyester film having excellent isotropy can be easily produced without requiring the above operation of forming by extrusion.

Here, "having excellent isotropy" of the liquid crystal polyester film means that the value of the molecular orientation ratio (MOR) of the liquid crystal polyester film is in the range of 1 to 1.3.

When the liquid composition of the embodiment is a dispersion in which a liquid crystal polyester powder is insoluble in a medium and the liquid crystal polyester powder is dispersed in the medium that is a liquid, a liquid crystal polyester film having both dielectric properties and isotropy can be produced.

When applying a solution casting method, there is a limitation that a liquid crystal polyester having the property of being soluble in a solvent has to be used. In a liquid crystal polyester having increased solubility in a solvent, the dielectric properties may be lowered, for example, by the increased polarity.

On the other hand, according to the liquid composition comprising the liquid crystal polyester powder of the embodiment, it is possible to produce a liquid crystal polyester film having both dielectric properties and isotropy without requiring the operation of dissolving the liquid crystal polyester powder in a solvent.

### <Method for producing liquid composition>

The liquid composition of the embodiment can be obtained by mixing a medium, a liquid crystal polyester powder, and another component used as necessary in a batch or in an appropriate order.

As the medium and the liquid crystal polyester powder, those described in the above <<Liquid composition>> can be given as examples.

As one embodiment, provided is a method for producing a liquid composition, the method comprising a step of mixing: a liquid crystal polyester powder comprising a liquid crystal polyester and having an average particle diameter of 30 µm or less; and a medium, wherein the specific gravity of the medium measured in accordance with JIS Z 8804 using water as a reference substance is 0.90 or more.

### <<Method for producing liquid crystal polyester film>>

The method for producing a liquid crystal polyester film according to an embodiment comprises obtaining a liquid crystal polyester film comprising a liquid crystal polyester by applying the liquid composition according to the embodiment onto a support and heat-treating the liquid composition.

As the liquid composition, those described in the above <<Liquid composition>> can be given as examples.

The above method for producing a liquid crystal polyester film may comprise the following steps.

A step of applying the liquid composition according to the embodiment onto a support to form a liquid crystal polyester film precursor on the support (application step).

A step of heat-treating the liquid crystal polyester film precursor to obtain a liquid crystal polyester film (heat-treatment step).

The application step in the method for producing a liquid crystal polyester film may comprise, after applying the liquid composition according to the embodiment onto a support, a step of removing the medium from the applied liquid composition (drying step).

That is, the method for producing a liquid crystal polyester film according to the embodiment may comprise obtaining a liquid crystal polyester film comprising a liquid crystal polyester by applying the liquid composition according to the embodiment onto a support, removing the medium from the applied liquid composition, and heat-treating the liquid composition.

In addition, the method for producing a liquid crystal polyester film may even more comprise a step of separating the support from a laminate in which the support and the liquid crystal polyester film are laminated (separation step). The liquid crystal polyester film can be suitably used as a film for an electronic part even in a state of being formed on the support as a laminate, and thus the separation step is not an essential step in the production step of the liquid crystal polyester film.

Hereinafter, one example of the method for producing a liquid crystal polyester film according to the embodiment will be described with reference to drawings.

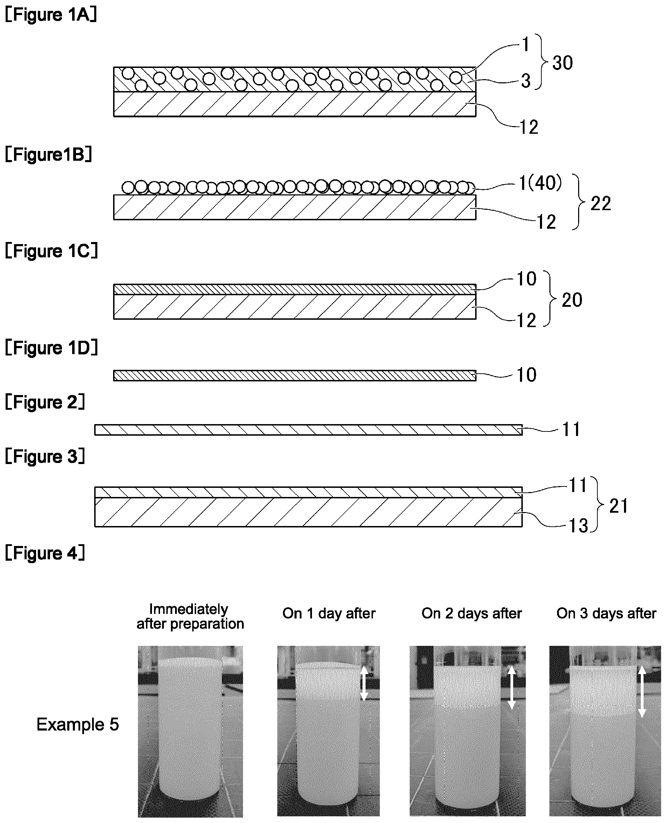

Figure 1 is schematic diagrams showing one example of a production process of the liquid crystal polyester film and the laminate according to the embodiment.

First, a liquid composition 30 is applied onto a support 12 (Figure 1A application step). The liquid composition 30 comprises a liquid crystal polyester powder 1 and a medium 3. A liquid crystal polyester liquid composition can be applied onto the support by a roller coating method, a dip coating method, a spray coating method, a spinner coating method, a curtain coating method, a slot coating method, a screen printing method, or the like, and a method that enables application onto the support in such a way as to provide smoothness and uniformity on the surface can be appropriately selected. In addition, in order to make the distribution of the liquid crystal polyester powder uniform, the operation of stirring the liquid composition may be carried out before application.

The support 12 is preferably in the shape of a plate, a sheet, or a film, and examples thereof include a glass plate, a resin film, or a metal foil. Among these, a resin film or a metal foil is preferable, and a copper foil is particularly preferable because the copper foil has excellent heat resistance, it is easy to apply the liquid composition onto the copper foil, and it is easy to remove the copper foil from the liquid crystal polyester film.

Examples of the resin film include a polyimide (PI) film. Examples of a commercially available product thereof include "Upilex S" and "Upilex R" from UBE Corporation, "Kapton" from DuPont-Toray Co., Ltd., and "IF30," "IF70," and "LV300" from SKC Kolon PI, Inc. The thickness of the resin film is preferably 25 µm or more and 75 µm or less, and more preferably 50 µm or more and 75 µm or less. The thickness of the metal foil is preferably 3 µm or more and 75 µm or less, more preferably 5 µm or more and 30 µm or less, and even more preferably 10 µm or more and 25 µm or less.

Next, the medium 3 is removed from the liquid composition 30 applied onto the support 12 (Figure 1B drying step) to obtain a liquid crystal polyester film precursor 40 to be heat-treated. The medium 3 does not have to be completely removed from the liquid composition, and a part of the medium included in the liquid composition may be removed, or the entire medium may be removed. The proportion of the medium included in the liquid crystal polyester film precursor 40 is preferably 50% by mass or less, more preferably 3% by mass or more and 12% by mass or less, and even more preferably 5% by mass or more and 10% by mass or less, based on the total mass of the liquid crystal polyester film precursor. When the content of the medium in the liquid crystal polyester film precursor is equal to or greater than the above lower limit value, the possibility that the thermal conductivity of the liquid crystal polyester film decreases is reduced. In addition, when the content of the medium in the liquid crystal polyester film precursor is equal to or less than the above upper limit value, the possibility that the appearance of the liquid crystal polyester film is degraded by foaming or the like during the heat-treatment is reduced.

The medium is preferably removed by evaporating the medium, and examples of a method therefor include heating, depressurization, and ventilation, and these may be combined. In addition, the medium may be removed in a continuous manner or in a one-by-one manner. From the viewpoint of productivity and operability, the medium is preferably removed by heating in a continuous manner, and more preferably by heating while ventilating in a continuous manner. The temperature for medium removal is preferably a temperature lower than the melting point of the liquid crystal polyester powder, and is, for example, 40°C or more and 200°C or less, and preferably 60°C or more and 200°C or less. The time for medium removal is, for example, 0.2 hours or more and 12 hours or less, and preferably 0.5 hours or more and 8 hours or less.

A laminate precursor 22 having the support 12 and the liquid crystal polyester film precursor 40 thus obtained is heat-treated to obtain a laminate having the support 12 and a liquid crystal polyester film 10 (a film obtained by heat-treating the liquid crystal polyester film precursor 40) (Figure 1C heat-treatment step). At this time, the liquid crystal polyester film 10 formed on the support is obtained.

Due to the heat-treatment, the polymerization reaction (solid phase polymerization) of the liquid crystal polyester included in the liquid crystal polyester film precursor may more proceed.

Examples of a heat-treatment condition include raising the temperature from the temperature of 50°C lower than the boiling point of the medium to the heat-treatment temperature to be reached and then carrying out heat-treatment at a temperature equal to or higher than the melting point of the liquid crystal polyester.

During raising the temperature, the polymerization reaction of the liquid crystal polyester may proceed due to heating, but by increasing the temperature increase rate until the heat-treatment temperature is reached, the increase in the molecular weight of the liquid crystal polyester in the liquid crystal polyester powder can be suppressed to some extent, the liquid crystal polyester powder melts well, and a high-quality film can be easily obtained. The temperature increase rate from the temperature of 50°C lower than the boiling point of the medium to the heat-treatment temperature is preferably 3°C/min or more, and more preferably 5°C/min or more.

The heat-treatment temperature is preferably equal to or higher than the melting point of the liquid crystal polyester, more preferably a temperature higher than the melting point of the liquid crystal polyester, and even more preferably a temperature of +5°C or higher than the melting point of the liquid crystal polyester. The heat-treatment temperature may be appropriately determined depending on the type of the liquid crystal polyester, and as one example, the heat-treatment temperature is preferably 230°C or more and 400°C or less, more preferably 300°C or more and 380°C or less, and even more preferably 320°C or more and 350°C or less. By carrying out heat-treatment at a temperature higher than the melting point of the liquid crystal polyester, the liquid crystal polyester powder melts well, and a high-quality liquid crystal polyester film can be formed. It can be confirmed by the liquid crystal polyester film precursor 40 having become transparent that the liquid crystal polyester powder has been melted.

The boiling point of the medium here refers to the boiling point at the pressure during raising the temperature. In addition, when the heating of the laminate precursor 22 is started from lower than the temperature of 50°C lower than the boiling point of the medium, the temperature increase rate may be set in the range from the time of reaching the temperature of 50°C lower than the boiling point of the medium to the time of reaching the heat-treatment temperature. The time taken to reach the temperature of 50°C lower than the boiling point of the medium is arbitrary. In addition, the time after reaching the heat-treatment temperature may be regarded as the heat-treatment time. The heat-treatment time may be, for example, 0.5 hours or more, 1 hour or more and 24 hours or less, or 3 hours or more and 12 hours or less.

As the removal of the medium, the heat-treatment may be carried out in a continuous manner or in a one-by-one manner, and from the viewpoint of productivity and operability, the heat-treatment is preferably carried out in a continuous manner, and more preferably carried out in a continuous manner following the removal of the medium.

Next, the liquid crystal polyester film 10 can be obtained as a single-layer film by separating the liquid crystal polyester film 10 from the laminate 20 having the support 12 and the liquid crystal polyester film 10 (Figure 1D separation step). When a glass plate is used as the support 12, the liquid crystal polyester film 10 is preferably separated from the laminate 20 by peeling off the liquid crystal polyester film 10 from the laminate 20. When a resin film is used as the support 12, the liquid crystal polyester film 10 is preferably separated from the laminate 20 by peeling off the resin film or the liquid crystal polyester film 10 from the laminate 20. When a metal foil is used as the support 12, the liquid crystal polyester film 10 is preferably separated from the laminate 20 by etching and removing the metal foil. When a resin film, particularly a polyimide film, is used as the support, the polyimide film or the liquid crystal polyester film is easily peeled off from the laminate 20, and a liquid crystal polyester film having a good appearance can be obtained. When a metal foil is used as the support, the laminate 20 may be used as a metal-clad laminated plate for a printed wiring board without separating the liquid crystal polyester film from the laminate 20.

According to the method for producing a liquid crystal polyester film according to the embodiment, it is possible to produce a liquid crystal polyester film having excellent isotropy.

In the conventional melt forming method, a thin film of the liquid crystal polyester is produced by making the melted liquid crystal polyester into a film, whereas in the above method for producing according to the embodiment, a liquid crystal polyester powder is thinly disposed on a support in advance and then melted, and in this respect, the above method according to the embodiment differs greatly from the conventional method for producing a film.

In the method for producing a liquid crystal polyester film or a laminate according to the embodiment, a liquid crystal polyester powder is thinly disposed on a support in advance and made into a film, and thus a physical force that causes bias in molecular orientation as in extrusion or the like is not applied, and it is possible to produce a liquid crystal polyester film having excellent isotropy.

In addition, when the number average molecular weight of the liquid crystal polyester in the liquid crystal polyester powder is 10000 or less, the liquid composition has a property suitable for application, and the melted state of the liquid crystal polyester film during the heat-treatment is good, and it is possible to produce a high-quality liquid crystal polyester film having excellent isotropy, which is suitable for a use of a film for an electronic part.

In addition, by using a liquid crystal polyester powder having an average particle diameter of 30 µm or less as a raw material, a high-quality polyester film having a thickness suitable for a use of a film for an electronic part can be easily produced.

In addition, in the liquid composition, there is not the following limitation: the liquid crystal polyester powder should be soluble in the medium; and thus a liquid crystal polyester having excellent dielectric properties can be adopted, and a liquid crystal polyester film having excellent dielectric properties and isotropy can be easily obtained.

### «Method for producing laminate»

The method for producing a laminate according to the embodiment comprises obtaining a laminate comprising a support and the liquid crystal polyester film by applying the liquid composition according to the embodiment onto the support and heat-treating the liquid composition to form a liquid crystal polyester film comprising a liquid crystal polyester.

The above method for producing a laminate may comprise the following steps.

A step of applying the liquid composition according to the embodiment onto a support to form a liquid crystal polyester film precursor on the support (application step).

A step of heat-treating the liquid crystal polyester film precursor to obtain a laminate comprising the support and the liquid crystal polyester film (heat-treatment step).

As in the above method for producing a liquid crystal polyester film, the application step in the method for producing a laminate may comprise, after applying the liquid composition according to the embodiment onto a support, a step of removing the medium from the applied liquid composition (drying step).

That is, the method for producing a laminate according to the embodiment may compriseapplying the liquid composition according to the embodiment onto a support, removing the medium from the applied liquid composition, and heat-treating the liquid composition to form a liquid crystal polyester film comprising a liquid crystal polyester to thereby obtain a laminate comprising the support and the liquid crystal polyester film.

Figures 1A to 1D are schematic diagrams showing one example of a production process of the liquid crystal polyester film and the laminate according to the embodiment. The method for producing a laminate given as an example in Figure 1 is as described in the above «Method for producing liquid crystal polyester film» except that the above separation step (Figure 1D) is not carried out, and thus the description thereof will be omitted.

According to the method for producing a laminate according to the embodiment, it is possible to produce a laminate having the liquid crystal polyester film of the embodiment.

### <<Liquid crystal polyester film>>

Figure 2 is a schematic diagram showing a configuration of a liquid crystal polyester film 11 according to the embodiment.

The liquid crystal polyester film of the embodiment (hereinafter, sometimes simply referred to as the "film") comprises a liquid crystal polyester, has a relative permittivity at a frequency of 1 GHz of 3 or less, has a dielectric loss tangent at a frequency of 1 GHz of 0.005 or less, and has a value of the molecular orientation ratio (MOR) measured using a microwave orientation meter in the range of 1 to 1.3.

A film satisfying the above specifications has suitable quality as a film for an electronic part. The quality standards therefor are the above relative permittivity, dielectric loss tangent, and molecular orientation ratio (isotropy of the film), and other factors such as thickness and appearance (presence or absence of the occurrence of a hole or a through hole) are taken into consideration.

As one example, the values of the relative permittivity and the dielectric loss tangent of the film can be controlled by the type of the liquid crystal polyester. In addition, as one example, the degree of isotropy of the film can be controlled by the method for producing the film.

The film of the embodiment has a relative permittivity at a frequency of 1 GHz of 3 or less, preferably 2.9 or less, more preferably 2.8 or less, even more preferably 2.7 or less, and particularly preferably 2.6 or less. In addition, the relative permittivity of the film may be 2.3 or more, 2.4 or more, or 2.5 or more. One example of the numerical range of a value of the relative permittivity of the film may be 2.3 or more and 3 or less, 2.4 or more and 2.9 or less, 2.5 or more and 2.8 or less, 2.5 or more and 2.7 or less, and 2.5 or more and 2.6 or less.

The film of the embodiment has a dielectric loss tangent at a frequency of 1 GHz of 0.005 or less, preferably 0.004 or less, more preferably 0.003 or less, even more preferably 0.002 or less, and particularly preferably 0.001 or less. In addition, the dielectric loss tangent of the liquid crystal polyester film may be 0.0003 or more, 0.0005 or more, or 0.0007 or more.

One example of the numerical range of a value of the dielectric loss tangent of the film may be 0.0003 or more and 0.005 or less, 0.0005 or more and 0.004 or less, 0.0007 or more and 0.003 or less, 0.0007 or more and 0.002 or less, or 0.0007 or more and 0.001 or less.

The relative permittivity and the dielectric loss tangent at a frequency of 1 GHz of the film can be measured under the following conditions by a capacitance method using an impedance analyzer.

The film is melted at 350°C using a flow tester and then cooled and solidified to manufacture a tablet having a diameter of 1 cm and a thickness of 0.5 cm. The relative permittivity and the dielectric loss tangent at 1 GHz of the obtained tablet are measured under the following conditions.
- Measurement method: Capacitance method
- Electrode model: 16453A
- Measurement environment: 23°C, 50% RH
- Applied voltage: 1 V

In the film of the embodiment, the value of the molecular orientation ratio (MOR) measured using a microwave orientation meter is in the range of 1 to 1.3, preferably in the range of 1 to 1.1, preferably in the range of 1 to 1.08, more preferably in the range of 1 to 1.06, and even more preferably in the range of 1 to 1.04.

The molecular orientation ratio (MOR) is measured using a microwave molecular orientation meter (for example, MOA-5012A manufactured by Oji Scientific Instruments Co., Ltd.). The microwave molecular orientation meter is an apparatus that utilizes the fact that the transmission intensity of a microwave differs between the orientation direction and a perpendicular direction depending on the orientation of molecules. Specifically, a sample is irradiated with a microwave having a constant frequency (12 GHz is used) while rotating the sample, the intensity of the transmitted microwave that changes depending on the orientation of the molecules is measured, and the ratio of maximum value/minimum value thereof is defined as MOR. The interaction between a microwave electric field having a constant frequency and the dipoles that constitute the molecules is related to the inner product of the vectors of the both. Because of the anisotropy of the permittivity of the sample, the intensity of the microwave changes depending on the angle at which the sample is disposed, and thus it is possible to know the orientation ratio.

The film of the embodiment preferably has a linear expansion coefficient determined in the temperature range between 50°C and 100°C under a condition of a temperature increase rate of 5°C/min of 85 ppm/°C or less, more preferably 50 ppm/°C or less, even more preferably 40 ppm/°C or less, and particularly preferably 30 ppm/°C or less. The lower limit value of the linear expansion coefficient is not particularly limited, and is, for example, 0 ppm/°C or more. In addition, the linear expansion coefficient of a copper foil is 18 ppm/°C, and thus for example, when the copper foil and the film are laminated, the linear expansion coefficient of the film of the embodiment is preferably a value close to that value. That is, the linear expansion coefficient of the film of the embodiment is preferably 0 ppm/°C or more and 50 ppm/°C or less, more preferably 10 ppm/°C or more and 40 ppm/°C or less, and even more preferably 20 ppm/°C or more and 30 ppm/°C or less. When the linear expansion coefficient differs depending on the direction or site of the film, the higher value is adopted as the linear expansion coefficient of the film. The linear expansion coefficient of the film can be measured using a thermomechanical analyzer (for example, model: TMA8310, manufactured by Rigaku Corporation). The film of the embodiment satisfying the above numerical range has a low linear expansion coefficient and high dimensional stability.

A film having excellent isotropy has a small difference in linear expansion coefficient depending on the measurement direction.

For the film of the embodiment, in the above linear expansion coefficient, the difference between the linear expansion coefficient in MD and the linear expansion coefficient in TD (MD - TD when MD > TD, and TD - MD when TD > MD) is preferably 2 ppm/°C or less, and more preferably 1 ppm/°C or less. In the film formed by the casting method, MD is the applying direction of the dispersion. As in the calculation of the above difference in the linear expansion coefficient, in reality, it is necessary to know the linear expansion coefficients in different directions, and thus, if MD and TD of the film are unknown, when any direction of the film is taken as MD and the direction that intersects at 90° therewith is taken as TD, the directions may be set so that the difference between the linear expansion coefficients in those directions may be the largest.

The film of the embodiment satisfying the above numerical range has excellent isotropy of linear expansion and high dimensional stability in the longitudinal direction and the transverse direction.

The film of the embodiment preferably has no hole or through hole as an appearance suitable for a film for an electronic part. When the film has a hole or a through hole, a plating liquid may seep into the hole or the through hole during plating. The liquid crystal polyester film produced from the liquid crystal polyester powder according to the embodiment as a raw material is of high quality, having a thickness suitable for a film for an electronic part and having the generation of a hole or a through hole suppressed.

The thickness of the film of the embodiment is not particularly limited, and the thickness suitable for a film for an electronic part is preferably 5 to 50 µm, more preferably 7 to 40 µm, even more preferably 10 to 33 µm, and particularly preferably 15 to 20 µm.

In the present description, the "thickness" is the average value of values obtained by measuring the thickness at 10 randomly selected places in accordance with a JIS standard (K7130-1992).

A film having excellent dielectric properties can be obtained by selecting a raw material having excellent dielectric properties from any liquid crystal polyester.

The proportion of the content of the liquid crystal polyester based on a total mass of the film of the embodiment of 100% by mass may be 50 to 100% by mass or 80 to 95% by mass.

The film of the embodiment may comprise more than 70% by mass and 100% by mass or less of the above liquid crystal polyester of the embodiment, or may comprise 80 to 100% by mass of the same, based on 100% by mass in total of the liquid crystal polyesters included in the film of the embodiment. Examples of the above liquid crystal polyester include those given as examples in the liquid crystal polyester powder according to the embodiment described above, for example, a liquid crystal polyester having a structural unit represented by the above formula (1), and a liquid crystal polyester having a structural unit represented by the above formula (1), a structural unit represented by the above formula (2), and a structural unit represented by the above formula (3). At least one copolymer selected from the group consisting of 1) to 34) given as the specific examples of the preferable liquid crystal polyester described above can also be given as an example.

The film of the embodiment may be a film that comprises a liquid crystal polyester, has a relative permittivity at a frequency of 1 GHz of 3 or less, has a dielectric loss tangent at a frequency of 1 GHz of 0.005 or less, and has a value of the molecular orientation ratio (MOR) measured using a microwave orientation meter in the range of 1 to 1.3 (provided that the content of a liquid crystal polyester soluble in an aprotic solvent is less than 5% by mass per 100% by mass in total of the liquid crystal polyesters).

The film of the embodiment may be a film that comprises a liquid crystal polyester, has a relative permittivity at a frequency of 1 GHz of 3 or less, has a dielectric loss tangent at a frequency of 1 GHz of 0.005 or less, and has a value of the molecular orientation ratio (MOR) measured using a microwave orientation meter in the range of 1 to 1.3 (provided that the content of a liquid crystal polyester soluble in the medium according to the liquid composition of the embodiment is less than 5% by mass per 100% by mass in total of the liquid crystal polyesters).

The film of the embodiment may be a film that comprises a liquid crystal polyester, has a relative permittivity at a frequency of 1 GHz of 3 or less, has a dielectric loss tangent at a frequency of 1 GHz of 0.005 or less, and has a value of the molecular orientation ratio (MOR) measured using a microwave orientation meter in the range of 1 to 1.3 (except for one comprising a liquid crystal polyester soluble in an aprotic solvent).

The film of the embodiment may be a film that comprises a liquid crystal polyester, has a relative permittivity at a frequency of 1 GHz of 3 or less, has a dielectric loss tangent at a frequency of 1 GHz of 0.005 or less, and has a value of the molecular orientation ratio (MOR) measured using a microwave orientation meter in the range of 1 to 1.3 (except for one comprising a liquid crystal polyester soluble in the medium according to the liquid composition of the embodiment).

Here, examples of the liquid crystal polyester soluble in an aprotic solvent or the medium include those given as examples in the liquid crystal polyester powder according to the embodiment.

The method for producing the film of the embodiment is not particularly limited, and the film of the embodiment can be produced by the above <<Method for producing crystal polyester film>>.

The film of the embodiment can be suitably used for a use of a film for an electronic part such as a printed wiring board. The film of the embodiment can be provided as a substrate (for example, a flexible substrate), a laminated plate (for example, a flexible copper-clad laminated plate), a printed board, a printed wiring board, a printed circuit board, or the like, which comprise the film as an insulating material.

### <<Laminate>>

The laminate of the embodiment comprises a metal layer and the film according to the embodiment laminated on the metal layer.

Figure 3 is a schematic diagram showing a configuration of a laminate 21 according to one embodiment of the present invention. The laminate 21 comprises a metal layer 13 and a film 11 laminated on the metal layer 13.

Examples of the film included in the laminate include those given above as examples, and the description thereof will be omitted.

Examples of the metal layer included in the laminate include those given as examples of the support in the above <<Method for producing liquid crystal polyester film>> and <<Method for producing laminate>>, and a metal foil is preferable. Copper is preferable as a metal constituting the metal layer from the viewpoint of electric conductivity and cost, and a copper foil is preferable as the metal foil.

The thickness of the laminate of the embodiment is not particularly limited, and is preferably 5 to 130 µm, more preferably 10 to 70 µm, and even more preferably 15 to 60 µm.

The method for producing the laminate of the embodiment is not particularly limited, and the laminate of the embodiment can be produced by the above <<Method for producing laminate>>.

The laminate of the embodiment can be suitably used for a use of a film for an electronic part such as a printed wiring board.

### Examples

Next, the present invention will be described in more detail with reference to Examples, but the present invention is not limited to the following Examples.

### <<Liquid crystal polyester fine particle powder>>

### <Measurement methods>

### [Measurement of flow starting temperature of liquid crystal polyester]

Using a flow tester ("model CFT-500" manufactured by Shimadzu Corporation), a cylinder equipped with a die having a nozzle having an inner diameter of 1 mm and a length of 10 mm was filled with about 2 g of a liquid crystal polyester, the liquid crystal polyester was melted and extruded from a nozzle while raising the temperature at a rate of 4°C/min under a load of 9.8 MPa (100 kg/cm²), and the temperature (FT) showing a viscosity of 4800 Pa•s (48000P) was measured.

### [Measurement of melting point of liquid crystal polyester]

Using a differential scanning calorimeter ("DSC-50" manufactured by Shimadzu Corporation), the temperature was raised at a temperature increase rate of 10°C/min, the position of an endothermic peak was confirmed, and the temperature at the position of the top of the endothermic peak was measured as the melting point of the liquid crystal polyester.

### [Measurement of particle diameter of liquid crystal polyester fine particle powder]

Zero point zero one grams of a liquid crystal polyester fine particle powder was weighed and dispersed in about 10 g of pure water. The prepared dispersion of the liquid crystal polyester fine particle powder was dispersed using an ultrasonic wave for 5 minutes. A volume-based cumulative particle size distribution of the liquid crystal polyester fine particle powder was measured with the refractive index of pure water being 1.333 using a laser diffraction scattering type particle diameter distribution measuring apparatus ("LA-950V2" manufactured by HORIBA, Ltd.), the particle diameter (µm) at which the cumulative volume proportion from the small particle side was 10% was calculated as D₁₀, the particle diameter (µm) at which the cumulative volume proportion from the small particle side was 50% was calculated as the average particle diameter (D₅₀), and the particle diameter (µm) at which the cumulative volume proportion from the small particle side was 90% was calculated as D₉₀.

### [Measurement of specific gravity of liquid crystal polyester fine particle powder]

The specific gravity at a temperature of 23°C and 1 atm was measured using water as an immersion liquid in accordance with the method specified in JIS K 7112 (method A).

A measurement sample was prepared by processing the liquid crystal polyester powder produced in each of the following Production Examples by the method shown below.

### <Measurement sample for specific gravity of powder of liquid crystal polyester (A)>

The temperature of a powder of the liquid crystal polyester (A) obtained in the following Production Example was raised in a nitrogen atmosphere from room temperature to 215°C over 50 minutes, next raised from 215°C to 230°C over 1 hour, and raised from 230°C to 295°C over 15 hours and 30 minutes, and then after the temperature reached 295°C, heat-treatment was carried out by heating at the same temperature for 6 hours. The flow starting temperature of the obtained liquid crystal polyester (A) after the heat-treatment was measured and as a result, found to be 322°C. Next, using a twin-screw extruder (PCM-30 manufactured by Ikegai Ironworks Corp.), melt kneading was carried out at a die head temperature of 335°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 340°C and a mold temperature of 130°C and molded into a plate shape of 64 mm × 64 mm × 3 mm, and this was used as a measurement sample.

### <Measurement sample for specific gravity of powder of liquid crystal polyester (B)>

The temperature of a powder of the liquid crystal polyester (B) obtained in the following Production Example was raised in a nitrogen atmosphere from room temperature to 230°C over 1 hour, next raised from 230°C to 240°C over 10 minutes, and raised from 240°C to 287°C over 6 hours, and then after the temperature reached 287°C, heat-treatment was carried out by heating at the same temperature for 5 hours. The flow starting temperature of the obtained liquid crystal polyester (B) after the heat-treatment was measured and as a result, found to be 331°C. Next, using a twin-screw extruder (PCM-30 manufactured by Ikegai Ironworks Corp.), melt kneading was carried out at a die head temperature of 345°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 350°C and a mold temperature of 130°C and molded into a plate shape of 64 mm × 64 mm × 3 mm, and this was used as a measurement sample.

### <Measurement sample for specific gravity of powder of liquid crystal polyester (C)>

The temperature of a powder of the liquid crystal polyester (C) obtained in the following Production Example was raised in a nitrogen atmosphere from room temperature to 215°C over 49 minutes, next raised from 215°C to 225°C over 8 minutes, and raised from 225°C to 260°C over 2 hours and 55 minutes, and then after the temperature reached 260°C, heat-treatment was carried out by heating at the same temperature for 5 hours. The flow starting temperature of the obtained liquid crystal polyester (C) after the heat-treatment was measured and as a result, found to be 302°C. Next, using a twin-screw extruder (PCM-30 manufactured by Ikegai Ironworks Corp.), melt kneading was carried out at a die head temperature of 300°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 320°C and a mold temperature of 130°C and molded into a plate shape of 64 mm × 64 mm × 3 mm, and this was used as a measurement sample.

### <Measurement sample for specific gravity of powder of liquid crystal polyester (D)>

The temperature of a powder of the liquid crystal polyester (D) obtained in the following Production Example was raised in a nitrogen atmosphere from room temperature to 215°C over 49 minutes, next raised from 215°C to 225°C over 8 minutes, and raised from 225°C to 275°C over 4 hours and 10 minutes, and then after the temperature reached 275°C, heat-treatment was carried out by heating at the same temperature for 5 hours. The flow starting temperature of the obtained liquid crystal polyester (D) after the heat-treatment was measured and as a result, found to be 304°C. Next, using a twin-screw extruder (PCM-30 manufactured by Ikegai Ironworks Corp.), melt kneading was carried out at a die head temperature of 300°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 320°C and a mold temperature of 130°C and molded into a plate shape of 64 mm × 64 mm × 3 mm, and this was used as a measurement sample.

### <Measurement sample for specific gravity of powder of liquid crystal polyester (E)>

The temperature of a powder of the liquid crystal polyester (E) obtained in the following Production Example was raised in a nitrogen atmosphere from room temperature to 215°C over 49 minutes, next raised from 215°C to 225°C over 8 minutes, and raised from 225°C to 260°C over 2 hours and 55 minutes, and then after the temperature reached 260°C, heat-treatment was carried out by heating at the same temperature for 5 hours. The flow starting temperature of the obtained liquid crystal polyester (E) after the heat-treatment was measured and as a result, found to be 304°C. Next, using a twin-screw extruder (PCM-30 manufactured by Ikegai Ironworks Corp.), melt kneading was carried out at a die head temperature of 300°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 320°C and a mold temperature of 130°C and molded into a plate shape of 64 mm × 64 mm × 3 mm, and this was used as a measurement sample.

### <Measurement sample for specific gravity of powder of liquid crystal polyester (F)>

The temperature of a powder of the liquid crystal polyester (F) obtained in the following Production Example was raised in a nitrogen atmosphere from room temperature to 215°C over 49 minutes, next raised from 215°C to 225°C over 8 minutes, and raised from 225°C to 260°C over 2 hours and 55 minutes, and then after the temperature reached 260°C, heat-treatment was carried out by heating at the same temperature for 5 hours. The flow starting temperature of the obtained liquid crystal polyester (F) after the heat-treatment was measured and as a result, found to be 298°C. Next, using a twin-screw extruder (PCM-30 manufactured by Ikegai Ironworks Corp.), melt kneading was carried out at a die head temperature of 300°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 310°C and a mold temperature of 130°C and molded into a plate shape of 64 mm × 64 mm × 3 mm, and this was used as a measurement sample.

### <Measurement sample for specific gravity of powder of liquid crystal polyester (G)>

The temperature of a powder of the liquid crystal polyester (G) obtained in the following Production Example was raised in a nitrogen atmosphere from room temperature to 215°C over 49 minutes, next raised from 215°C to 225°C over 8 minutes, and raised from 225°C to 290°C over 5 hours and 25 minutes, and then after the temperature reached 290°C, heat-treatment was carried out by heating at the same temperature for 5 hours. The flow starting temperature of the obtained liquid crystal polyester (G) after the heat-treatment was measured and as a result, found to be 290°C. Next, using a twin-screw extruder (PCM-30 manufactured by Ikegai Ironworks Corp.), melt kneading was carried out at a die head temperature of 300°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 310°C and a mold temperature of 130°C and molded into a plate shape of 64 mm × 64 mm × 3 mm, and this was used as a measurement sample.

### <Measurement sample for specific gravity of powder of liquid crystal polyester (H)>

The temperature of a powder of the liquid crystal polyester (H) obtained in the following Production Example was raised in a nitrogen atmosphere from room temperature to 215°C over 49 minutes, next raised from 215°C to 225°C over 8 minutes, and raised from 225°C to 290°C over 5 hours and 25 minutes, and then after the temperature reached 290°C, heat-treatment was carried out by heating at the same temperature for 5 hours. The flow starting temperature of the obtained liquid crystal polyester (H) after the heat-treatment was measured and as a result, found to be 297°C. Next, using a twin-screw extruder (PCM-30 manufactured by Ikegai Ironworks Corp.), melt kneading was carried out at a die head temperature of 300°C and a screw rotation speed of 150 rpm to carry out granulation to obtain a pellet of the liquid crystal polyester, then using an injection molding machine (PNX40 manufactured by Nissei Plastic Industrial Co., Ltd.), the pellet was injection molded at a cylinder temperature of 310°C and a mold temperature of 130°C and molded into a plate shape of 64 mm × 64 mm × 3 mm, and this was used as a measurement sample.

### <Production of liquid crystal polyester fine particle powder>

### [Production Example 1]

### • Production of liquid crystal polyester (A)

Into a reactor equipped with a stirrer, a torque meter, a nitrogen gas introduction tube, a thermometer, and a reflux cooler were added 1034.99 g (5.5 mol) of 2-hydroxy-6-naphthoic acid, 378.33 g (1.75 mol) of 2,6-naphthalenedicarboxylic acid, 83.07 g (0.5 mol) of terephthalic acid, 272.52 g (2.475 mol, 0.225 mol excess based on the total molar amount of 2,6-naphthalenedicarboxylic acid and terephthalic acid) of hydroquinone, 1226.87 g (12 mol) of acetic anhydride, and 0.17 g of 1-methylimidazole as a catalyst. The gas in the reactor was replaced with nitrogen gas, then the temperature was raised from room temperature to 145°C over 15 minutes while stirring in a nitrogen gas stream, and the resulting mixture was refluxed at 145°C for 1 hour.

Next, while distilling off by-produced acetic acid and unreacted acetic anhydride, the temperature was raised from 145°C to 310°C over 3 hours and 30 minutes and held at 310°C for 3 hours, and then the contents in the reactor were taken out in a molten state into a vat and cooled to obtain a liquid crystal polyester (A).

The flow starting temperature of this liquid crystal polyester (A) was 268°C. This liquid crystal polyester (A) was pulverized using a cutter mill VM-16 manufactured by Orient Crusher Co., Ltd. to obtain a powder of the liquid crystal polyester (A) having an average particle diameter of 394 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (A) was pulverized to obtain a liquid crystal polyester fine particle powder of Production Example 1. The average particle diameter (D₅₀) of this liquid crystal polyester fine particle powder was 10 µm. In addition, the melting point of the liquid crystal polyester fine particle powder of Production Example 1 was measured using a differential scanning calorimeter and as a result, found to be 290°C. The liquid crystal polyester fine particle powder of Production Example 1 corresponds to the liquid crystal polyester powder according to the embodiment of the present invention.

### [Production Example 2]

The above powder of the liquid crystal polyester (A) was not pulverized using a jet mill, but instead, particles that did not pass through a sieve having an aperture size of 75 µm were classified by sieving, to obtain a liquid crystal polyester fine particle powder having an average particle diameter (D₅₀) of 64 µm.

### [Production Example 3]

### • Production of liquid crystal polyester (B)

Into a reactor equipped with a stirrer, a torque meter, a nitrogen gas introduction tube, a thermometer, and a reflux condenser were added 994.5 g (7.2 mol) of parahydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride, and 0.20 g of 1-methylimidazole was added as a catalyst. The gas in the reactor was replaced with nitrogen gas, then the temperature was raised from room temperature to 150°C over 30 minutes while stirring in a nitrogen gas stream, and the resulting mixture was refluxed at 150°C for 1 hour.

Next, while distilling off by-produced acetic acid and unreacted acetic anhydride, the temperature was raised from 150°C to 320°C over 2 hours and 50 minutes, and the time when an increase in torque was observed was regarded as the end of the reaction, and a liquid crystal polyester (B) was obtained.

The flow starting temperature of this liquid crystal polyester (B) was 250°C. This liquid crystal polyester (B) was pulverized using a cutter mill VM-16 manufactured by Orient Crusher Co., Ltd. to obtain a powder of the liquid crystal polyester (B) having an average particle diameter of 492 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (B) was pulverized to obtain a liquid crystal polyester fine particle powder of Production Example 3. The average particle diameter (D₅₀) of this liquid crystal polyester fine particle powder was 10 µm. In addition, the melting point of the liquid crystal polyester fine particle powder of Production Example 3 was measured using a differential scanning calorimeter and as a result, found to be 290°C. The liquid crystal polyester fine particle powder of Production Example 3 corresponds to the liquid crystal polyester powder according to the embodiment of the present invention.

### [Production Example 4]

### • Production of liquid crystal polyester (C)

Into a reactor equipped with a stirrer, a torque meter, a nitrogen gas introduction tube, a thermometer, and a reflux condenser were added 182.3 g (1.3 mol) of parahydroxybenzoic acid, 1759.5 g (9.4 mol) of 2-hydroxy-6-naphthoic acid, 54.8 g (0.3 mol) of isophthalic acid, and 1165.6 g (11.4 mol) of acetic anhydride, and 0.06 g of 1-methylimidazole was added as a catalyst. The gas in the reactor was replaced with nitrogen gas, then the temperature was raised from room temperature to 150°C over 30 minutes while stirring in a nitrogen gas stream, and the resulting mixture was refluxed at 150°C for 1 hour.

Next, while distilling off by-produced acetic acid and unreacted acetic anhydride, the temperature was raised from 150°C to 300°C over 3 hours and 30 minutes, and the time when an increase in torque was observed was regarded as the end of the reaction, and a liquid crystal polyester (C) was obtained.

The flow starting temperature of this liquid crystal polyester (C) was 280°C. This liquid crystal polyester (C) was pulverized using a cutter mill VM-16 manufactured by Orient Crusher Co., Ltd. to obtain a powder of the liquid crystal polyester (C) having an average particle diameter of 450 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (C) was pulverized to obtain a liquid crystal polyester fine particle powder of Production Example 4. The average particle diameter (D₅₀) of this liquid crystal polyester fine particle powder was 9 µm. In addition, the melting point of the liquid crystal polyester fine particle powder of Production Example 4 was measured using a differential scanning calorimeter and as a result, found to be 322°C. The liquid crystal polyester fine particle powder of Production Example 4 corresponds to the liquid crystal polyester powder according to the embodiment of the present invention.

### [Production Example 5]

### • Production of liquid crystal polyester (D)

Into a reactor equipped with a stirrer, a torque meter, a nitrogen gas introduction tube, a thermometer, and a reflux condenser were added 354.0 g (2.6 mol) of parahydroxybenzoic acid, 1573.2 g (8.4 mol) of 2-hydroxy-6-naphthoic acid, 12.8 g (0.1 mol) of isophthalic acid, and 1193.2 g (11.7 mol) of acetic anhydride, and 0.06 g of 1-methylimidazole was added as a catalyst. The gas in the reactor was replaced with nitrogen gas, then the temperature was raised from room temperature to 150°C over 30 minutes while stirring in a nitrogen gas stream, and the resulting mixture was refluxed at 150°C for 1 hour.

Next, while distilling off by-produced acetic acid and unreacted acetic anhydride, the temperature was raised from 150°C to 300°C over 3 hours and 30 minutes, and the time when an increase in torque was observed was regarded as the end of the reaction, and a liquid crystal polyester (D) was obtained.

The flow starting temperature of this liquid crystal polyester (D) was 269.7°C. This liquid crystal polyester (D) was pulverized using a cutter mill VM-16 manufactured by Orient Crusher Co., Ltd. to obtain a powder of the liquid crystal polyester (D) having an average particle diameter of 423 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (D) was pulverized to obtain a liquid crystal polyester fine particle powder of Production Example 5. The average particle diameter (D₅₀) of this liquid crystal polyester fine particle powder was 10 µm. In addition, the melting point of the liquid crystal polyester fine particle powder of Production Example 5 was measured using a differential scanning calorimeter and as a result, found to be 305°C. The liquid crystal polyester fine particle powder of Production Example 5 corresponds to the liquid crystal polyester powder according to the embodiment of the present invention.

### [Production Example 6]

### • Production of liquid crystal polyester (E)

Into a reactor equipped with a stirrer, a torque meter, a nitrogen gas introduction tube, a thermometer, and a reflux condenser were added 273.5 g (2.0 mol) of parahydroxybenzoic acid, 1676.7 g (8.9 mol) of 2-hydroxy-6-naphthoic acid, 20.5 g (0.1 mol) of 4,4'-dihydroxybiphenyl, and 1213.6 g (11.9 mol) of acetic anhydride, and 0.06 g of 1-methylimidazole was added as a catalyst. The gas in the reactor was replaced with nitrogen gas, then the temperature was raised from room temperature to 150°C over 30 minutes while stirring in a nitrogen gas stream, and the resulting mixture was refluxed at 150°C for 1 hour.

Next, while distilling off by-produced acetic acid and unreacted acetic anhydride, the temperature was raised from 150°C to 300°C over 3 hours and 30 minutes, and the time when an increase in torque was observed was regarded as the end of the reaction, and a liquid crystal polyester (E) was obtained.

The flow starting temperature of this liquid crystal polyester (E) was 266.4°C. This liquid crystal polyester (E) was pulverized using a cutter mill VM-16 manufactured by Orient Crusher Co., Ltd. to obtain a powder of the liquid crystal polyester (E) having an average particle diameter of 526 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (E) was pulverized to obtain a liquid crystal polyester fine particle powder of Production Example 6. The average particle diameter (D₅₀) of this liquid crystal polyester fine particle powder was 10 µm.In addition, the melting point of the liquid crystal polyester fine particle powder of Production Example 6 was measured using a differential scanning calorimeter and as a result, found to be 311°C. The liquid crystal polyester fine particle powder of Production Example 6 corresponds to the liquid crystal polyester powder according to the embodiment of the present invention.

### [Production Example 7]

### • Production of liquid crystal polyester (F)

Into a reactor equipped with a stirrer, a torque meter, a nitrogen gas introduction tube, a thermometer, and a reflux condenser were added 45.6 g (0.3 mol) of parahydroxybenzoic acid, 1407.6 g (7.5 mol) of 2-hydroxy-6-naphthoic acid, 297.0 g (1.6 mol) of 4,4'-dihydroxybiphenyl, 265.0 g (1.6 mol) of isophthalic acid, and 1201.6 g (11.8 mol) of acetic anhydride, and 0.06 g of 1-methylimidazole was added as a catalyst. The gas in the reactor was replaced with nitrogen gas, then the temperature was raised from room temperature to 150°C over 30 minutes while stirring in a nitrogen gas stream, and the resulting mixture was refluxed at 150°C for 1 hour.

Next, while distilling off by-produced acetic acid and unreacted acetic anhydride, the temperature was raised from 150°C to 300°C over 3 hours and 30 minutes, and the time when an increase in torque was observed was regarded as the end of the reaction, and a liquid crystal polyester (F) was obtained.

The flow starting temperature of this liquid crystal polyester (F) was 262.4°C. This liquid crystal polyester (F) was pulverized using a cutter mill VM-16 manufactured by Orient Crusher Co., Ltd. to obtain a powder of the liquid crystal polyester (F) having an average particle diameter of 438 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (F) was pulverized to obtain a liquid crystal polyester fine particle powder of Production Example 7. The average particle diameter (D₅₀) of this liquid crystal polyester fine particle powder was 10 µm.In addition, the melting point of the liquid crystal polyester fine particle powder of Production Example 7 was measured using a differential scanning calorimeter and as a result, found to be 302°C. The liquid crystal polyester fine particle powder of Production Example 7 corresponds to the liquid crystal polyester powder according to the embodiment of the present invention.

### [Production Example 8]

### • Production of liquid crystal polyester (G)

Into a reactor equipped with a stirrer, a torque meter, a nitrogen gas introduction tube, a thermometer, and a reflux condenser were added 76.0 g (0.6 mol) of parahydroxybenzoic acid, 1345.5 g (7.2 mol) of 2-hydroxy-6-naphthoic acid, 307.2 g (1.7 mol) of 4,4'-dihydroxybiphenyl, 255.8 g (1.5 mol) of terephthalic acid, and 1201.6 g (11.8 mol) of acetic anhydride, and 0.06 g of 1-methylimidazole was added as a catalyst. The gas in the reactor was replaced with nitrogen gas, then the temperature was raised from room temperature to 150°C over 30 minutes while stirring in a nitrogen gas stream, and the resulting mixture was refluxed at 150°C for 1 hour.

Next, while distilling off by-produced acetic acid and unreacted acetic anhydride, the temperature was raised from 150°C to 300°C over 3 hours and 30 minutes, and the time when an increase in torque was observed was regarded as the end of the reaction, and a liquid crystal polyester (G) was obtained.

The flow starting temperature of this liquid crystal polyester (G) was 244.8°C. This liquid crystal polyester (G) was pulverized using a cutter mill VM-16 manufactured by Orient Crusher Co., Ltd. to obtain a powder of the liquid crystal polyester (G) having an average particle diameter of 442 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (G) was pulverized to obtain a liquid crystal polyester fine particle powder of Production Example 8. The average particle diameter (D₅₀) of this liquid crystal polyester fine particle powder was 11 µm. In addition, the melting point of the liquid crystal polyester fine particle powder of Production Example 8 was measured using a differential scanning calorimeter and as a result, found to be 285°C. The liquid crystal polyester fine particle powder of Production Example 8 corresponds to the liquid crystal polyester powder according to the embodiment of the present invention.

### [Production Example 9]

### • Production of liquid crystal polyester (H)

Into a reactor equipped with a stirrer, a torque meter, a nitrogen gas introduction tube, a thermometer, and a reflux condenser were added 76.0 g (0.6 mol) of parahydroxybenzoic acid, 993.6 g (7.2 mol) of 2-hydroxy-6-naphthoic acid, 481.4 g (2.6 mol) of 4,4'-dihydroxybiphenyl, 429.4 g (2.6 mol) of terephthalic acid, and 1201.6 g (11.8 mol) of acetic anhydride, and 0.06 g of 1-methylimidazole was added as a catalyst. The gas in the reactor was replaced with nitrogen gas, then the temperature was raised from room temperature to 150°C over 30 minutes while stirring in a nitrogen gas stream, and the resulting mixture was refluxed at 150°C for 1 hour.

Next, while distilling off by-produced acetic acid and unreacted acetic anhydride, the temperature was raised from 150°C to 300°C over 3 hours and 30 minutes, and the time when an increase in torque was observed was regarded as the end of the reaction, and a liquid crystal polyester (H) was obtained.

The flow starting temperature of this liquid crystal polyester (H) was 239.8°C. This liquid crystal polyester (H) was pulverized using a cutter mill VM-16 manufactured by Orient Crusher Co., Ltd. to obtain a powder of the liquid crystal polyester (H) having an average particle diameter of 301 µm.

### • Production of liquid crystal polyester fine particle powder

Next, using a jet mill ("KJ-200" manufactured by Kurimoto, Ltd., grinding nozzle diameter: 4.5 mm), with the classifying rotor rotation speed set to 10000 rpm, the grinding nozzle pressure set to 0.64 MPa, and the treatment speed set to 2.1 kg/hour, the powder of the liquid crystal polyester (H) was pulverized to obtain a liquid crystal polyester fine particle powder of Production Example 9. The average particle diameter (D₅₀) of this liquid crystal polyester fine particle powder was 10 µm.In addition, the melting point of the liquid crystal polyester fine particle powder of Production Example 9 was measured using a differential scanning calorimeter and as a result, found to be 272°C. The liquid crystal polyester fine particle powder of Production Example 9 corresponds to the liquid crystal polyester powder according to the embodiment of the present invention.

The measurement results of the particle diameter and the specific gravity of the liquid crystal polyester fine particle powders of Production Examples 1 to 9 are shown in Table 1.

**[Table 1]**

| Liquid crystal polyester fine particle powder | D₁₀ (µm) | D₅₀ (µm) | D₉₀ (µm) | Specific gravity |
|---|---|---|---|---|
| Production Example 1 | 4 | 10 | 24 | 1.38 |
| Production Example 2 | 26 | 64 | 123 | 1.38 |
| Production Example 3 | 4 | 10 | 18 | 1.39 |
| Production Example 4 | 4 | 9 | 21 | 1.38 |
| Production Example 5 | 4 | 10 | 23 | 1.38 |
| Production Example 6 | 4 | 10 | 23 | 1.31 |
| Production Example 7 | 5 | 10 | 19 | 1.37 |
| Production Example 8 | 5 | 11 | 21 | 1.38 |
| Production Example 9 | 5 | 10 | 19 | 1.38 |

### <<Liquid composition>>

### <Measurement methods>

### [Measurement of specific gravity of dispersion medium]

The specific gravity at a temperature of 23°C and 1 atm was measured in accordance with the method specified in JIS Z 8804: 2012 (hydrometer) using water as a reference substance.

### [Measurement of viscosity of dispersion medium]

The viscosity of the dispersion medium at 20 to 25°C was measured in accordance with the method specified in JIS Z 8803.

### <Production of liquid composition>

### [Comparative Examples 1 to 6 and Examples 1 to 10]

Into 86 parts by mass of each dispersion medium shown in Table 2 was added 14 parts by mass of the liquid crystal polyester fine particle powder of the liquid crystal polyester (A) produced in Production Example 1 above, and the resulting mixture was stirred using a stirring and defoaming machine AR-500 manufactured by Thinky Corporation to obtain a liquid composition that was a dispersion using each medium as a dispersion medium.

### [Comparative Example 7]

Into 86 parts by mass of the dispersion medium (ethylene glycol) shown in Table 2 was added 14 parts by mass of the liquid crystal polyester fine particle powder of the liquid crystal polyester (A) produced in Production Example 2 above, and the resulting mixture was stirred using a stirring and defoaming machine AR-500 manufactured by Thinky Corporation to obtain a liquid composition that was a dispersion using the medium as a dispersion medium.

### [Comparative Example 8 and Examples 11 to 16]

Into 75 parts by mass of each dispersion medium shown in Table 3 was added 25 parts by mass of the liquid crystal polyester fine particle powder of the liquid crystal polyester (B) produced in Production Example 3 above, and the resulting mixture was stirred using a stirring and defoaming machine AR-500 manufactured by Thinky Corporation to obtain a liquid composition that was a dispersion using each medium as a dispersion medium.

### [Comparative Example 9 and Examples 17 to 21]

Into 75 parts by mass of each dispersion medium shown in Table 4 was added 25 parts by mass of the liquid crystal polyester fine particle powder of the liquid crystal polyester (C) produced in Production Example 4 above, and the resulting mixture was stirred using a stirring and defoaming machine AR-500 manufactured by Thinky Corporation to obtain a liquid composition that was a dispersion using each medium as a dispersion medium.

### [Comparative Example 10 and Examples 22 to 26]

Into 92 parts by mass of each dispersion medium shown in Table 5 was added 8 parts by mass of the liquid crystal polyester fine particle powder of the liquid crystal polyester (D) produced in Production Example 5 above, and the resulting mixture was stirred using a stirring and defoaming machine AR-500 manufactured by Thinky Corporation to obtain a liquid composition that was a dispersion using each medium as a dispersion medium.

### [Comparative Example 11 and Examples 27 to 31]

Into 75 parts by mass of each dispersion medium shown in Table 6 was added 25 parts by mass of the liquid crystal polyester fine particle powder of the liquid crystal polyester (E) produced in Production Example 6 above, and the resulting mixture was stirred using a stirring and defoaming machine AR-500 manufactured by Thinky Corporation to obtain a liquid composition that was a dispersion using each medium as a dispersion medium.

### [Comparative Example 12 and Examples 32 to 36]

Into 75 parts by mass of each dispersion medium shown in Table 7 was added 25 parts by mass of the liquid crystal polyester fine particle powder of the liquid crystal polyester (F) produced in Production Example 7 above, and the resulting mixture was stirred using a stirring and defoaming machine AR-500 manufactured by Thinky Corporation to obtain a liquid composition that was a dispersion using each medium as a dispersion medium.

### [Comparative Example 13 and Examples 37 to 41]

Into 86 parts by mass of each dispersion medium shown in Table 8 was added 14 parts by mass of the liquid crystal polyester fine particle powder of the liquid crystal polyester (G) produced in Production Example 8 above, and the resulting mixture was stirred using a stirring and defoaming machine AR-500 manufactured by Thinky Corporation to obtain a liquid composition that was a dispersion using each medium as a dispersion medium.

### [Comparative Example 14 and Examples 42 to 46]

Into 75 parts by mass of each dispersion medium shown in Table 9 was added 25 parts by mass of the liquid crystal polyester fine particle powder of the liquid crystal polyester (H) produced in Production Example 9 above, and the resulting mixture was stirred using a stirring and defoaming machine AR-500 manufactured by Thinky Corporation to obtain a liquid composition that was a dispersion using each medium as a dispersion medium.

### [Evaluation of dispersion of liquid crystal polyester fine particle powder]

For the liquid composition prepared in each of the above Examples and Comparative Examples, the liquid composition was observed immediately after preparation, and the dispersion was evaluated in accordance with the following criteria.
E (Excellent): No layer separation between the dispersion medium and the liquid crystal polyester fine particle powder was observed, and no accumulation of the liquid crystal polyester fine particle powder was observed at the bottom of the container containing the liquid composition.
G (Good): No layer separation between the dispersion medium and the liquid crystal polyester fine particle powder was observed, but a slight accumulation of the liquid crystal polyester fine particle powder was observed at the bottom of the container containing the liquid composition.
F (Failure): The dispersion medium and the liquid crystal polyester fine particle powder were separated into layers.

### [Evaluation of suppression of sedimentation of liquid crystal polyester fine particle powder]

For the liquid composition prepared in each of the above Examples and Comparative Examples, the liquid composition was observed immediately after preparation and a predetermined number of days thereafter, and the state of sedimentation was evaluated in accordance with the following criteria.
E (Excellent): No layer separation between the dispersion medium and the liquid crystal polyester fine particle powder was observed.
G (Good): The liquid crystal polyester fine particle powder was slightly sedimented, and layer separation between the dispersion medium and the liquid crystal polyester fine particle powder was slightly observed.
F (Failure): The liquid crystal polyester fine particle powder was completely sedimented on the bottom of the container, and the dispersion medium and the liquid crystal polyester fine particle powder were separated into layers.

The above items and the results thereof are shown in Tables 2 to 9.

**[Table 2]**

| | Dispersion medium | Specific gravity of dispersion medium | Diffierence in specific gravity between powder and dispersion medium | Viscosity of dispersion medium (mPa·s) | Liquid crystal polyester fine particle powder | D₅₀ (µm) | Dispersion | Sedimentation *1 |
|---|---|---|---|---|---|---|---|---|
| Comparative Example 1 | Diisopropyl ether | 0.73 | 0.66 | 0.33 | Production Example 1 | 10 | F | |
| Comparative Example 2 | Normal hexane | 0.66 | 0.72 | 0.30 | Production Example 1 | 10 | F | |
| Comparative Example 3 | Isopropyl alcohol | 0.78 | 0.60 | 1.90 | Production Example 1 | 10 | F | |
| Comparative Example 4 | Methanol | 0.79 | 0.59 | 0.54 | Production Example 1 | 10 | F | |
| Comparative Example 5 | Acetone | 0.79 | 0.59 | 0.30 | Production Example 1 | 10 | G | |
| Comparative Example 6 | Tetrahydrofuran | 0.89 | 0.49 | 0.46 | Production Example 1 | 10 | G | |
| Example 1 | 1,3-Butanediol | 1.01 | 0.37 | 104 | Production Example 1 | 10 | E | E |
| Example 2 | Propylene glycol | 1.04 | 0.34 | 56 | Production Example 1 | 10 | E | E |
| Example 3 | N-Methyl-2-pyrrolidone | 1.03 | 0.35 | 1.32 | Production Example 1 | 10 | E | F |
| Example 4 | Butyl lactate | 0.98 | 0.40 | 3.58 | Production Example 1 | 10 | E | G |
| Example 5 | Cyclohexanone | 0.95 | 0.43 | 2.02 | Production Example 1 | 10 | E | F |
| Example 6 | Di-(2-chloroethyl) ether | 1.22 | 0.16 | 7.45 | Production Example 1 | 10 | E | G |
| Example 7 | Isophorone | 0.92 | 0.46 | 6.40 | Production Example 1 | 10 | E | F |
| Example 8 | Dichloromethane | 1.33 | 0.05 | 0.43 | Production Example 1 | 10 | E | E |
| Example 9 | Sulfolane | 1.26 | 0.12 | 10 | Production Example 1 | 10 | E | E |
| Example 10 | Ethylene glycol | 1.11 | 0.27 | 16.50 | Production Example 1 | 10 | E | E |
| Comparative Example 7 | Ethylene glycol | 1.11 | 0.27 | 16.50 | Production Example 2 | 64 | G | |

| | | | | | | | | |
|---|---|---|---|---|---|---|---|---|
| *1 Appearance on day 3 after preparation of liquid composition | | | | | | | | |

**[Table 3]**

| | Dispersion medium | Specific gravity of dispersion medium | Difference in specific gravity between powder and dispersion medium | Viscosity of dispersion medium (mPa·s) | Liquid crystal polyester fine particle powder | Dso (µm) | Dispersion | Sedimentation *2 |
|---|---|---|---|---|---|---|---|---|
| Comparative Example 8 | Methanol | 0.79 | 0.60 | 0.54 | Production Example 3 | 10 | F | |
| Example 11 | 1,3-Butanediol | 1.01 | 0.38 | 104 | Production Example 3 | 10 | E | E |
| Example 12 | Propylene glycol | 1.04 | 0.35 | 56 | Production Example 3 | 10 | E | E |
| Example 13 | N-Methyl-2-pyrrolidone | 1.03 | 0.36 | 1.32 | Production Example 3 | 10 | E | F |
| Example 14 | Butyl lactate | 0.98 | 0.41 | 3.58 | Production Example 3 | 10 | E | G |
| Example 15 | Dichloromethane | 1.33 | 0.06 | 0.43 | Production Example 3 | 10 | E | E |
| Example 16 | Ethylene glycol | 1.11 | 0.28 | 16.50 | Production Example 3 | 10 | E | E |

| | | | | | | | | |
|---|---|---|---|---|---|---|---|---|
| *2 Appearance on day 1 after preparation of liquid composition | | | | | | | | |

**[Table 4]**

| | Dispersion medium | Specific gravity of dispersion medium | Difference in specific gravity between powder and dispersion medium | Viscosity of dispersion medium (mPa·s) | Liquid crystal polyester fine particle powder | D₅₀ (um) | Dispersion | Sedimentation *3 |
|---|---|---|---|---|---|---|---|---|
| Comparative Example 9 | Methanol | 0.79 | 0.59 | 0.54 | Production Example 4 | 9 | F | |
| Example 17 | 1,3-Butanediol | 1.01 | 0.37 | 104 | Production Example 4 | 9 | E | E |
| Example 18 | Propylene glycol | 1.04 | 0.34 | 56 | Production Example 4 | 9 | E | E |
| Example 19 | N-Methyl-2-pyrrolidone | 1.03 | 0.35 | 1.32 | Production Example 4 | 9 | E | F |
| Example 20 | Butyl lactate | 0.98 | 0.40 | 3.58 | Production Example 4 | 9 | E | F |
| Example 21 | Ethylene glycol | 1.11 | 0.27 | 16.50 | Production Example 4 | 9 | E | E |

| | | | | | | | | |
|---|---|---|---|---|---|---|---|---|
| *3 Appearance on day 1 after preparation of liquid composition | | | | | | | | |

**[Table 5]**

| | Dispersion medium | Specific gravity of dispersion medium | Difference in specific gravity between powder and dispersion medium | Viscosity of dispersion medium (mPa·s) | Liquid crystal polyester fine particle powder | Dso (µm) | Dispersion | Sedimentation *4 |
|---|---|---|---|---|---|---|---|---|
| Comparative Example 10 | Methanol | 0.79 | 0.59 | 0.54 | Production Example 5 | 10 | F | |
| Example 22 | 1,3-Butanediol | 1.01 | 0.37 | 104 | Production Example 5 | 10 | E | E |
| Example 23 | Propylene glycol | 1.04 | 0.34 | 56 | Production Example 5 | 10 | E | E |
| Example 24 | N-Methyl-2-pyrrolidone | 1.03 | 0.35 | 1.32 | Production Example 5 | 10 | E | F |
| Example 25 | Butyl lactate | 0.98 | 0.40 | 3.58 | Production Example 5 | 10 | E | G |
| Example 26 | Ethylene glycol | 1.11 | 0.27 | 16.50 | Production Example 5 | 10 | E | E |

| | | | | | | | | |
|---|---|---|---|---|---|---|---|---|
| *4 Appearance on day 1 after preparation of liquid composition | | | | | | | | |

**[Table 6]**

| | Dispersion medium | Specific gravity of dispersion medium | Difference in specific gravity between powder and dispersion medium | Viscosity of dispersion medium (mPa·s) | Liquid crystal polyester fine particle powder | Dso (µm) | Dispersion | Sedimentation *5 |
|---|---|---|---|---|---|---|---|---|
| Comparative Example 11 | Methanol | 0.79 | 0.52 | 0.54 | Production Example 6 | 10 | F | |
| Example 27 | 1,3-Butanediol | 1.01 | 0.30 | 104 | Production Example 6 | 10 | E | E |
| Example 28 | Propylene glycol | 1.04 | 0.27 | 56 | Production Example 6 | 10 | E | E |
| Example 29 | N-Methyl-2-pyrrolidone | 1.03 | 0.28 | 1.32 | Production Example 6 | 10 | E | F |
| Example 30 | Butyl lactate | 0.98 | 0.33 | 3.58 | Production Example 6 | 10 | E | F |
| Example 31 | Ethylene glycol | 1.11 | 0.20 | 16.50 | Production Example 6 | 10 | E | E |

| | | | | | | | | |
|---|---|---|---|---|---|---|---|---|
| *5 Appearance on day 1 after preparation of liquid composition | | | | | | | | |

**[Table 7]**

| | Dispersion medium | Specific gravity of dispersion medium | Difference in specific gravity between powder and dispersion medium | Viscosity of dispersion medium (mPa·s) | Liquid crystal polyester fine particle powder | D₅₀ (µm) | Dispersion | Sedimentation *6 |
|---|---|---|---|---|---|---|---|---|
| Comparative Example 12 | Methanol | 0.79 | 0.58 | 0.54 | Production Example 7 | 10 | F | |
| Example 32 | 1,3-Butanediol | 1.01 | 0.36 | 104 | Production Example 7 | 10 | E | E |
| Example 33 | Propylene glycol | 1.04 | 0.33 | 56 | Production Example 7 | 10 | E | E |
| Example 34 | N-Methyl-2-pyrrolidone | 1.03 | 0.34 | 1.32 | Production Example 7 | 10 | E | F |
| Example 35 | Butyl lactate | 0.98 | 0.39 | 3.58 | Production Example 7 | 10 | E | G |
| Example 36 | Ethylene glycol | 1.11 | 0.26 | 16.50 | Production Example 7 | 10 | E | E |

| | | | | | | | | |
|---|---|---|---|---|---|---|---|---|
| *6 Appearance on day 1 after preparation of liquid composition | | | | | | | | |

**[Table 8]**

| | Dispersion medium | Specific gravity of dispersion medium | Difference in specific gravity between powder and dispersion medium | Viscosity of dispersion medium (mPa·s) | Liquid crystal polyester fine particle powder | D₅₀ (µm) | Dispersion | Sedimentation *7 |
|---|---|---|---|---|---|---|---|---|
| Comparative Example 13 | Methanol | 0.79 | 0.59 | 0.54 | Production Example 8 | 11 | F | |
| Example 37 | 1,3-Butanediol | 1.01 | 0.37 | 104 | Production Example 8 | 11 | E | E |
| Example 38 | Propylene glycol | 1.04 | 0.34 | 56 | Production Example 8 | 11 | E | E |
| Example 39 | N-Methyl-2-pyrrolidone | 1.03 | 0.35 | 1.32 | Production Example 8 | 11 | E | F |
| Example 40 | Butyl lactate | 0.98 | 0.40 | 3.58 | Production Example 8 | 11 | E | F |
| Example 41 | Ethylene glycol | 1.11 | 0.27 | 16.50 | Production Example 8 | 11 | E | E |

| | | | | | | | | |
|---|---|---|---|---|---|---|---|---|
| *7 Appearance on day 1 after preparation of liquid composition | | | | | | | | |

**[Table 9]**

| | Dispersion medium | Specific gravity of dispersion medium | Difference in specific gravity between powder and dispersion medium | Viscosity of dispersion medium (mPa·s) | Liquid crystal polyester fine particle powder | D₅₀ (µm) | Dispersion | Sedimentation *8 |
|---|---|---|---|---|---|---|---|---|
| Comparative Example 14 | Methanol | 0.79 | 0.59 | 0.54 | Production Example 9 | 10 | F | |
| Example 42 | 1,3-Butanediol | 1.01 | 0.37 | 104 | Production Example 9 | 10 | E | E |
| Example 43 | Propylene glycol | 1.04 | 0.34 | 56 | Production Example 9 | 10 | E | E |
| Example 44 | N-Methyl-2-pyrrolidone | 1.03 | 0.35 | 1.32 | Production Example 9 | 10 | E | F |
| Example 45 | Butyl lactate | 0.98 | 0.40 | 3.58 | Production Example 9 | 10 | E | F |
| Example 46 | Ethylene glycol | 1.11 | 0.27 | 16.50 | Production Example 9 | 10 | E | E |

| | | | | | | | | |
|---|---|---|---|---|---|---|---|---|
| *8 Appearance on day 1 after preparation of liquid composition | | | | | | | | |

Figure 4 is images showing the appearances of the liquid composition (dispersion medium: cyclohexanone) of Example 5 for which sedimentation suppression was evaluated.

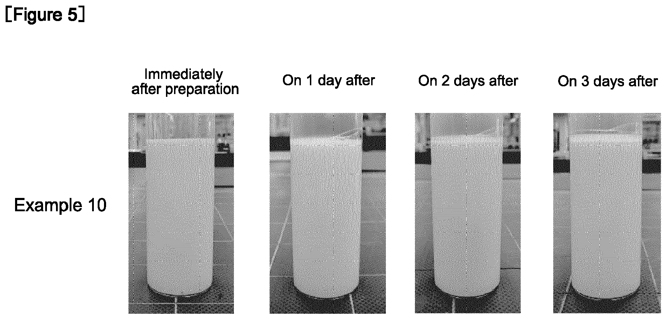

Figure 5 is images showing the appearances of the liquid composition (dispersion medium: ethylene glycol) of Example 10 for which sedimentation suppression was evaluated.

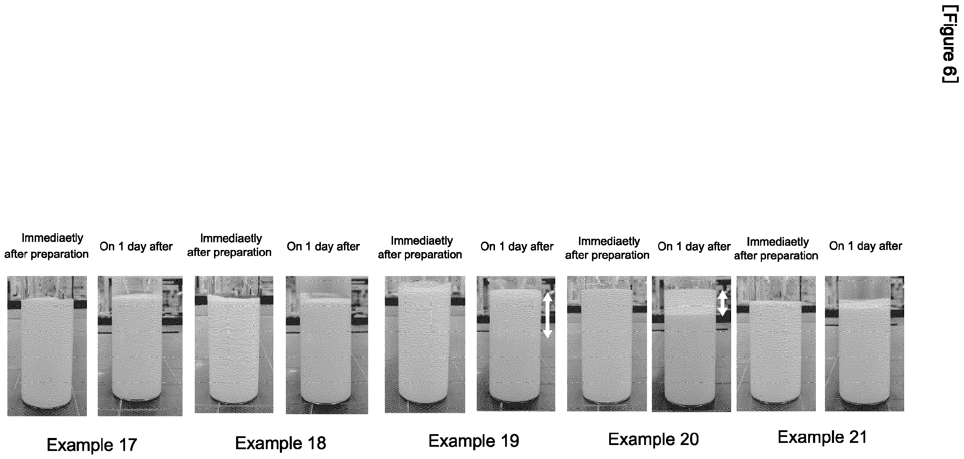

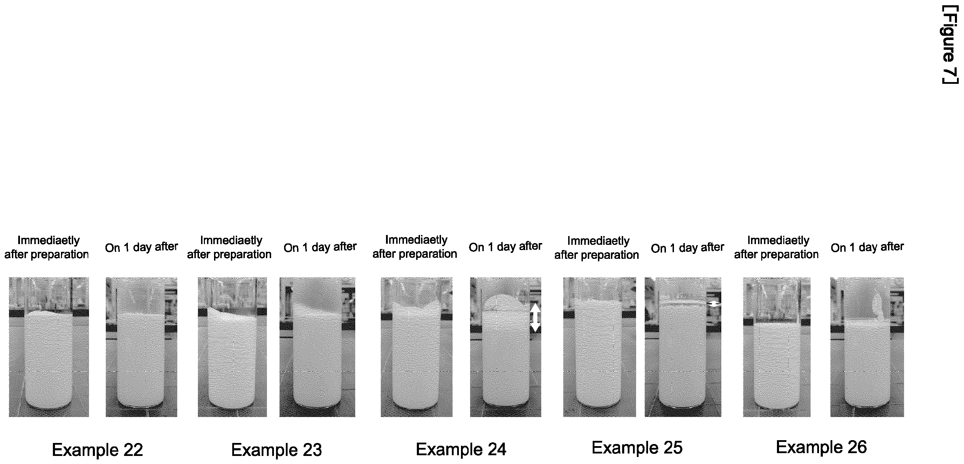

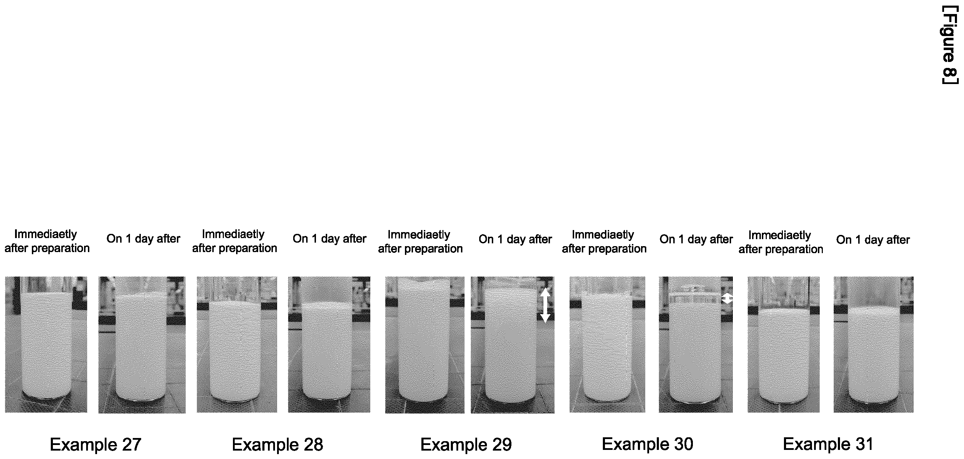

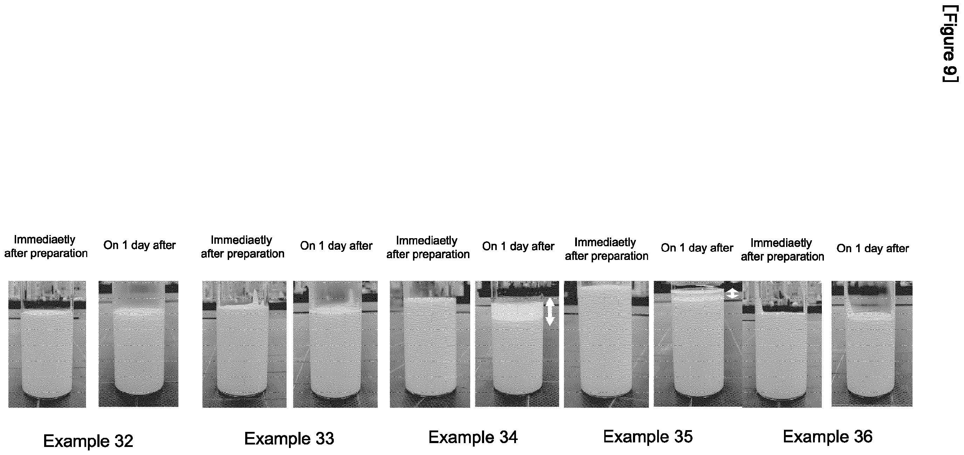

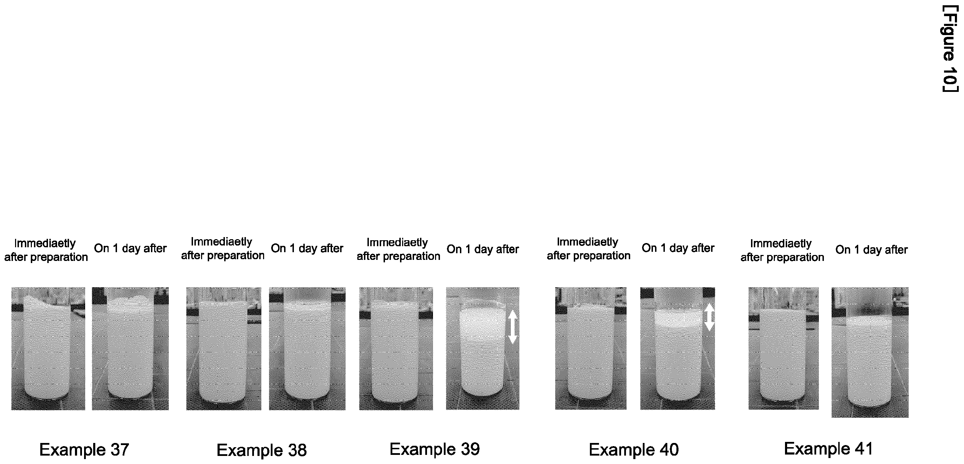

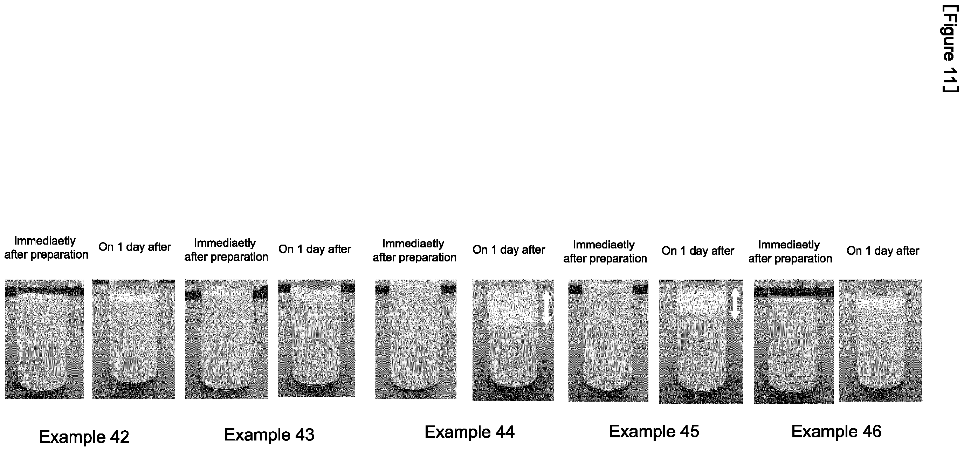

Figures 6 to 11 are images showing the appearances of the liquid compositions of Examples 17 to 46 for which sedimentation suppression was evaluated.

According to the results shown in Table 2, the liquid compositions of Examples 1 to 16 each comprising a liquid crystal polyester fine particle powder having an average particle diameter (D₅₀) of 30 µm or less and a medium having a specific gravity of 0.90 or more had an excellent state of dispersion of the liquid crystal polyester fine particle powder, and could be suitably used for producing a liquid crystal polyester film.

In addition, according to the results shown in Table 3, even if the liquid crystal polyester fine particle powder of the liquid crystal polyester (A) produced in Production Example 1 was used, and even if the liquid crystal polyester fine particle powder of the liquid crystal polyester (B) produced in Production Example 3 was used, in either case, a liquid composition having an excellent state of dispersion of the liquid crystal polyester fine particle powder was obtained. This indicates that the present invention can be applied by using the dispersion medium used in each Example even when the composition of the structural unit of the liquid crystal polyester is different.

On the other hand, the liquid compositions of Comparative Examples 1 to 8, which did not satisfy the above value of the average particle diameter (D₅₀) of the liquid crystal polyester fine particle powder or the specific gravity of the medium, were inferior in the state of dispersion of the liquid crystal polyester fine particle powder.

From the results of each Example, it can be read that both the high viscosity of the dispersion medium and the small difference in specific gravity between the dispersion medium and the liquid crystal polyester fine particle powder affect the suppression of sedimentation of the liquid crystal polyester fine particle powder.

It can be deemed that the higher the viscosity of the dispersion medium, the more preferable the suppression of sedimentation of the liquid crystal polyester fine particle powder tends to be (Examples 1, 2, 9, 10, 11, 12, and 16). Even when the viscosity of the dispersion medium was not so high, the suppression of sedimentation was good when the difference in specific gravity between the dispersion medium and the liquid crystal polyester fine particle powder was particularly small (Examples 8 and 15).

In addition, referring to the results shown in Tables 4 to 9, the results of the liquid compositions comprising the liquid crystal polyester fine particle powders of the liquid crystal polyesters (C) to (H), respectively, produced in Production Examples 4 to 9 (Comparative Examples 9 to 14 and Examples 17 to 46) also showed the same dispersion and sedimentation tendencies as in the results with the same dispersion media as above.

Each configuration in each embodiment, a combination thereof, and the like are examples, and addition, omission, substitution of a configuration, and other modifications of a configuration are possible unless they depart from the object of the present invention. In addition, the present invention is not limited to each embodiment, but is limited only to the scope of the claims.

### Reference Signs List

1 ... liquid crystal polyester powder, 3 ... medium, 30 ... liquid composition, 10 ... liquid crystal polyester film, 11 ... liquid crystal polyester film, 12 ... support, 13 ... metal layer, 20, 21 ... laminate, 22 ... laminate precursor, 40 ... liquid crystal polyester film precursor

## Claims

1. A liquid composition comprising:
a liquid crystal polyester powder comprising a liquid crystal polyester and having an average particle diameter of 30 µm or less; and
a medium, wherein
a specific gravity of the medium measured in accordance with JIS Z 8804 using water as a reference substance is 0.90 or more.

2. The liquid composition according to claim 1, wherein the liquid composition is a dispersion in which the liquid crystal polyester powder is dispersed in the medium that is a liquid.

3. The liquid composition according to claim 1 or 2, wherein the average particle diameter of the liquid crystal polyester powder is 0.5 µm or more and 30 µm or less.

4. The liquid composition according to any one of claims 1 to 3, wherein a difference in specific gravity between a specific gravity of the liquid crystal polyester powder measured by JIS K 7112 (method A) using water as a reference substance and the specific gravity of the medium measured in accordance with JIS Z 8804 using water as a reference substance is within 0.48.

5. The liquid composition according to any one of claims 1 to 4, wherein the specific gravity of the medium measured in accordance with JIS Z 8804 using water as a reference substance is 0.95 or more.

6. The liquid composition according to any one of claims 1 to 5, wherein the medium is at least one selected from the group consisting of propylene glycol, ethylene glycol, butanediol, N-methyl-2-pyrrolidone, butyl lactate, di-(2-chloroethyl) ether, dichloromethane, and sulfolane.

7. The liquid composition according to any one of claims 1 to 5, wherein the medium is at least one selected from the group consisting of propylene glycol, ethylene glycol, butanediol, dichloromethane, and sulfolane.

8. The liquid composition according to any one of claims 1 to 7, wherein the specific gravity of the medium measured in accordance with JIS Z 8804 using water as a reference substance is 1.03 or more.

9. The liquid composition according to any one of claims 1 to 8, wherein a viscosity of the medium measured between 20 and 25°C is 10 mPa·s or more.

10. The liquid composition according to any one of claims 1 to 9, wherein a specific gravity of the liquid crystal polyester powder measured in accordance with JIS Z 7112 (method A) using water as a reference substance is 1.35 or more and 1.40 or less.

11. The liquid composition according to any one of claims 1 to 10, wherein the liquid crystal polyester comprises a structural unit represented by the following formula (1):
(1) -O-Ar1-CO-
-wherein Ar1 represents a divalent aromatic hydrocarbon group, and
one or more hydrogen atoms in the group represented by Ar1 are each independently optionally replaced with a halogen atom, an alkyl group having 1 to 10 carbon atoms, or an aryl group having 6 to 20 carbon atoms.

12. The liquid composition according to any one of claims 1 to 11, wherein the liquid crystal polyester comprises a structural unit comprising a naphthalene structure.

13. The liquid composition according to claim 12, wherein the liquid crystal polyester comprises 40 mol% or more of a structural unit represented by the following formula (1) based on a total amount of all structural units in the liquid crystal polyester:
(1) -O-Ar1-CO-
-wherein Ar1 represents a 2,6-naphthylene group, and
one or more hydrogen atoms in the group represented by Ar1 are each independently optionally replaced with a halogen atom, an alkyl group having 1 to 10 carbon atoms, or an aryl group having 6 to 20 carbon atoms.

14. The liquid composition according to any one of claims 1 to 13, wherein the liquid crystal polyester comprises a structural unit represented by the following formula (1) and a structural unit represented by the following formula (2), or
comprises a structural unit represented by the following formula (1), a structural unit represented by the following formula (2), and a structural unit represented by the following formula (2):
(1) -O-Ar1-CO-
(2) -CO-Ar2-CO-
(3) -O-Ar3-O-
wherein Ar1 represents a 2,6-naphthylene group, a 1,4-phenylene group, or a 4,4'-biphenylylene group;
Ar2 and Ar3 each independently represent a 2,6-naphthylene group, a 2,7-naphthylene group, a 1,4-phenylene group, a 1,3-phenylene group, or a 4,4'-biphenylylene group; and
hydrogen atoms in the group represented by Ar1, Ar2, or Ar3 are each independently optionally replaced with a halogen atom, an alkyl group having 1 to 10 carbon atoms, or an aryl group having 6 to 20 carbon atoms.

15. The liquid composition according to any one of claims 1 to 14, wherein a proportion of a content of the medium is 50 to 99% by mass, and a proportion of a content of the liquid crystal polyester powder is 0.1 to 50% by mass, based on a total mass of the liquid composition.

16. A method for producing the liquid composition according to any one of claims 1 to 15, the method comprising a step of mixing:
a liquid crystal polyester powder comprising a liquid crystal polyester and having an average particle diameter of 30 µm or less; and
a medium, wherein
a specific gravity of the medium measured in accordance with JIS Z 8804 using water as a reference substance is 0.90 or more.

17. A method for producing a liquid crystal polyester film, comprising: obtaining a liquid crystal polyester film comprising the liquid crystal polyester by applying the liquid composition according to any one of claims 1 to 15 onto a support and heat-treating the liquid composition.

18. A method for producing a laminate, comprising: obtaining a laminate comprising a support and a liquid crystal polyester film by applying the liquid composition according to any one of claims 1 to 15 onto the support and heat-treating the liquid composition to form the liquid crystal polyester film comprising the liquid crystal polyester.
